Europäisches Patentamt

European Patent Office

Office européen des brevets

(19)

(11) Numéro de publication: **0 213 016**

**B1**

(12) FASCICULE DE BREVET EUROPEEN

(45) Date de publication du fascicule du brevet: **27.12.90**

(51) Int. Cl.⁵: **B 64 C 27/32**

(21) Numéro de dépôt: **86401623.3**

(22) Date de dépôt: **21.07.86**

(54) **Mât-moyeu intégré et tête de rotor de giravion le comportant.**

(30) Priorité: **22.07.85 FR 8511159**

(43) Date de publication de la demande:
**04.03.87 Bulletin 87/10**

(45) Mention de la délivrance du brevet:
**27.12.90 Bulletin 90/52**

(84) Etats contractants désignés:
**DE GB IT**

(56) Documents cités:
**FR-A-2 192 942**
**FR-A-2 427 251**
**FR-A-2 457 804**
**GB-A-2 136 377**
**US-A-3 322 200**

(73) Titulaire: **AEROSPATIALE Société Nationale Industrielle**
**37, Boulevard de Montmorency**
**F-75781 Paris Cédex 16 (FR)**

(72) Inventeur: **Mouille, René Louis**
**Villa la Pinéde 1e Coton Rouge**
**F-13100 Aix en Provence (FR)**
Inventeur: **Guimbal, Bruno**
**rue du Château Moustier**
**F-13220 Chateauneuf les Martigues (FR)**

(74) Mandataire: **Lepeudry-Gautherat, Thérèse et al**
**ARMENGAUD JEUNE CABINET LEPEUDRY 6,**
**rue du Fg. St-Honoré**
**F-75008 Paris (FR)**

**Description**

La présente invention concerne les rotors de giravions, et elle a plus précisément pour objet un mât-moyeu intégré, ainsi qu'une tête de rotor comport ce mât-moyeu intégré et destinée en particulier à l'équipement des hélicoptères.

On a déjà décrit, dans le brevet français 2 427 251 et dans son premier certificat d'addition 2 456 034, ainsi que dans la demande de brevet français 2 516 891, des têtes de rotors principaux ou de rotors arrière pour hélicoptères qui comportent un mât et un corps de moyeu pouvant être intégrés sous la forme d'une pièce monobloc réalisée en un matériau métallique ou composite.

Les rotors d'hélicoptères décrits dans ces documents comportent chacun un corps central de moyeu rigide, auquel la pied de chaque pale du rotor est accouplé par l'intermédiaire d'une butée sphérique lamifiée et d'un amortisseur de traînée, ou d'une contre-fiche de rappel élastique en traînée avec amortissement incorporé.

La butée sphérique lamifiée qui constitue une articulation autorisant les mouvements de la pale correspondante autour de ses trois axes de battement, de trainée et de commande de l'incidence, comporte une partie centrale lamifiée, formée d'un empilement alterné de calottes sphériques d'un matériau rigide et d'un matériau élastique et travaillant en compression et cisaillement entre une armature externe solidaire du moyen et une armature interne fixée à un organe de liaison à la pale.

L'amortisseur de trainée, qui peut être hydraulique mais qui, de préférence, est constitué d'un empilement alterné de plaques rigides et de plaques d'un matériau visco-élastique, ou de tubes coaxiaux entre lesquels est incorporé un manchon cylindrique en un matériau visco-élastique, a ses extrémités accouplées par des rotules au pied de la pale corresponante et en un point du moyeu, de sorte que pour les mouvements angulaires de la pale en trainée, il assure un énergique rappel élastique sur l'axe neutre en introduisant simultanément un certain amortissement de ces mouvements.

Dans le brevet français 2 427 251, le corps central du moyeu a la forme d'un plateau ou d'un anneau plat, de pourtour polygonal convexe ou sensiblement circulaire, s'étendant sensiblement radialement par rapport à l'axe de rotation du rotor, qui est confondu avec l'axe du mâtrotor supportant le moyeu, et ce plateau est traversé, dans la direction de l'axe du rotor, par autant d'ouvertures ou alvéoles que le rotor comporte de pales. Une butée sphérique lamifiée est montée en appui par son armature externe contre le bord extérieur de chaque ouverture, tandis que son armature interne est fixée aux extrémités internes des branches d'une pièce fourchue solidaire du pied de la pale correspondante, et le point du pourtour du moyeu, auquel l'amortisseur de traînée correspondant est accouplé par une rotule, est situé entre la butée sphérique lamifiée correspondante et celle de la pale immédiatement précédente ou suivante de la pale correspondante, dans le sens de rotation du rotor. De plus, un levier de commande de l'incidence de la pale correspondante est fixé à la pièce fourchue, du côté opposé à l'amortisseur de traînée correspondant, et, enfin, dans le cas d'un rotor principal, la branche inférieure de la pièce fourchue porte, sous son extrémité interne, une butée limitant le battement de la pale correspondante vers le bas, par la coopération avec un anneau réciproque monté coulissant radialement autour du mâtrotor, en-dessous du moyeu, de sorte que la butée vienne s'appuyer contre l'anneau réciproque aux faibles vitesses de rotation et à l'arrêt du rotor.

La pièce fourchue peut être constituée par un prolongement du pied de la pale correspondante, ou encore par une chape radiale à l'extrémité interne d'un organe rapporté de liaison au pied de la pale correspondante, les deux branches de cette chape d'extrémité interne ou de ce prolongement étant fixées à l'armature interne de la butée sphérique lamifiée correspondante par deux boulons. Dans le cas de l'utilisation d'un organe rapporté de liaison au pied de la pale, cet organe présente également, à son extrémité, externe, une autre chape par laquelle il es assujetti au pied de la pale correspondante par deux axes sensiblement perpendiculaires au plan du rotor, et dont l'un est amovible pour permettre de replier la pale dans le plan du rotor par pivotement autour de l'autre axe.

Afin d'intégrer, éventuellement, dans le rotor un dispositif de repliage automatique des pales, il a été proposé que cet organe rapporté de liaison soit conformé en manchon, dont une partie cylindrique permet de loger ce dispositif, et qui sert également à fixer le levier de commande de l'incidence de la pale correspondante, l'amortisseur de traînée correspondant, et la butée basse coopérant avec l'anneau réciproque.

Dans le but d'éliminer tous les problèmes potentiels qui résultent d'une liaison boulonnée du moyeu sur le mât-rotor, tels que la corrosion sous tension ou le desserrage des boulons, le corps central du moyen et le mât peuvent être intégrés, et il a été proposé que le corps central rigide du moyeu constitue avec le mât du rotor, une pièce métallique monobloc, par exemple en acier ou en titane et venue de forge ou de matriçage. Cependant, afin de diminuer la vulnérabilité, la masse et le coût d'un tel mât-moyeu intégré, ce dernier peut être réalisé en matériau composites, par empilage ou drapage de plis de tissus de fibres synthétiques ou minérales à haute résistance mécanique qui sont pré-imprégnés et agglomérés par une résine synthétique ultérieurement polymérisée et durcie. Dans ce dernier cas, afin de donner un bon caractère "fail-safe" au mât-moyeu intégré, une ceinture de structure composite est avantageusement bobinée autour du plateau de moyeu.

Les rotors décrits dans le premier certificat d'addition 2 456 034 au brevet français mentionné ci-dessus se distinguent essentiellement de ceux qui font l'objet de ce brevet principal par le fait que leur corps de moyeu comporte un fût central, prolongeant le mât du rotor, et portant un plateau supérieur et un plateau inférieur, l'armature externe de chaque butée sphérique lamifiée étant encastrée entre et fixée directement aux bords des deux plateaux, à la façon d'une entretoise rigide, et le pied de la pale correspondante étant réuni à l'armature interne de la butée sphérique lamifiée par une chape radiale et évidée pour le libre passage de la butée sphérique. De plus, il a été proposé dans ce Certificat d'addition, que l'ensemble du moyeu, notamment son fût et ses deux plateaux, forme, avec la partie supérieure du mât-rotor, une pièce monobloc, par exemple métallique et venue de forge ou de matriçage. Par analogie avec les développements proposés des rotors décrits dans le brevet français 2 427 251, on peut envisager de réaliser, pour l'équipement de rotors selon le certificat d'addition mentionné ci-dessus, un mât-moyeu intégré à deux plateaux sensiblement radiaux et en une structure composite. Il est à noter qu'une telle réalisation irait bien au-delà, dans le sens de la diminution de nombre des pièces et de la suppression des liaisons, des réalisations de rotors décrites dans la demande de brevet français n° 2 529 860, et qui comprennent deux plateaux en matériaux composites fixés à une entretoise métallique, qui les sépare, et sur la partie supérieure du mât-rotor métallique par des boulons, dans une architecture de base identique à celle des rotors décrits dans la demande de brevet français n° 81 22 027 et se distinguant essentiellement des rotors du certificat d'addition mentionné ci-dessus par le fait que le pied de chaque pale présente une boucle qui entoure directement la butée sphérique lamifiée correspondante et est fixée à l'armature interne de cette dernière.

On connaît également par le FR—A—2 457 804 un mât-moyeu intégré dont le corps de moyeu est une partie tubulaire qui prolonge le mât et s'évase en direction d'une partie annulaire formant une surépaisseur, le corps de moyeu étant ajouré par des ouvertures en nombre étal au nombre de pales et régulièrement réparties, des organes de retenue et d'articulation étant logés à l'intérieur du corps de moyeu et prenant appui contre la face interne de celui-ci.

Cependant, la fabrication du moyeu et du mât des rotors décrits dans tous les documents mentionnés ci-dessus sous la forme d'un mât-moyeu intégré, s'avère toujours délicate, difficile et coûteuse, que cette pièce monobloc soit métallique ou en matériaux composites, et qu'elle comporte un seul plateau radical à alvéoles ou deux plateaux radiaux sans alvéoles. En effet, le mât-moyeu intégré doit présenter, du côté opposé à son pied par lequel il est entraîné en rotation, une ou deux parties épanouies en corolle, formant le ou les plateaux de moyeu. Dans une réalisation métallique, le matriçage de cet ou ces parties en corolle est une opération relativement simple. Par contre, la réalisation d'une telle pièce en composite est très difficile, car elle est, en usage, très chargée en flexion et en cisaillement, et, de plus, sa forme concave ou doublement concave rend également sa fabrication très complexe, quel que soit le procédé utilisé. En particulier, la réalisation d'une partie épanouie en corolle pour former un plateau de moyeu pose de nombreux problèmes, notamment en ce qui concerne les variations d'épaisseur entre la partie formant le mât et la partie formant le plateau de moyeu, qui doivent être obtenues en assurant simulanément des chargement d'environ 90° de l'orientation des fibres à haute résistance mécanique, et l'empilage ou le drapage sans formation de plis des couches de tissu de fibres dans cette zone doublement évolutive (présentant des courbures dans deux directions sensiblement perpendiculaires), qui posent un problème lié au foisonnement des tissus.

Par la présente invention, on se propose de remédier à ces inconvénients majeurs, et l'invention a pour objet un mât-moyeu intégré présentant à la fois une structure simplifiée et plus légère, une sécurité et une fiabilité améliorées, et pouvant être fabriqué en métal ou en matériau composite d'une manière plus simple, plus économique et plus fiable.

L'invention a donc pour objet un mât-moyeu intégré, dont la masse est plus faible et dont la durée de vie est augmentée et la maintenance simplifiée, ce qui permet d'abaisser les coûts directs en opération.

L'invention a de plus pour objet un mât-moyeu intégré, de faible encombrement, donc de moindre traînée aérodynamique, et dont la structure simplifiée, en raison de la diminution du nombre des liaisons et donc des pièces qu'il comprend, procure de plus une faible vulnérabilité à la tête de rotor qui en est équipée, du fait qu'il assure une protection accrue de composants essentiels, tels que les organes de retenue et d'articulation des pales au moyeu, qui comprennent pour chaque pale au moins une butée lamifiée, par exemple une butée sphérique, et les organes du dispositif à butée de battement.

Par rapport au document FR—A—2 427 251 qui décrit déjà un mât-moyeu intégré hour rotor de giravion, du type comportant une partie tubulaire formant un mât, dont une extrémité est conformée en pied par lequel le mât-moyeu est destiné à être encastré sur un organe de transmission et entraîné en rotation autour de l'axe de la partie formant mât, laquelle est solidaire, du côté opposé au pied, d'une partie formant un corps de moyeu, coaxial à la partie formant mât et qui s'évase de sa portion d'extrémité par laquelle elle est liée au mât à sa portion d'extrémité opposée, dont est solidaire un anneau de renforcement, fourni par une augmentation locale et périphérique de son épaisseur, anneau destiné essentiellement à reprendre et à transmettre les effors centrifuges provenant des pales dans le mât-moyeu par l'intermédiaire d'organes de retenue et d'articulation logés à l'intérieur du corps de moyeu et auxquels chacune desdites pales est solidarisée par les deux branches plates inférieure et supérieure d'une pièce intermédiaire de liaison avec la pale, ledit corps de moyeu étant ajouré par des ouvertures en nombre égal au nombre de pales et régulièrement réparties en direction circonférentielle sur le pourtour dudit corps, ledit mât-moyeu selon l'invention se caractérise en ce que les ouvertures identiques les unes aux autres sont disposées sur le pourtour du corps de moyeu entre le mât et l'anneau de renforcement pour permettre le passage de chacune des branches inférieures de la pièce intermédiaire de liaison des pales avec leurs organes de retenue et d'articulation correspondants à l'intérieur de l'anneau de renforcement, lesdites ouvertures ayant sensiblement une forme en demi-lune ou en haricot trés arrondi présentant une concavité générale tournée vers l'anneau de renforcement de façon à permettre les débattements angulaires en pas, battement et trainée desdites branches inférieures.

La forme générale d'un tel mât-moyeu intégré, qui est bien adaptée à une réalisation métallique, est de plus mieux adaptée à une réalisation en matériaux composites que les formes connues de l'état de la technique, car elle permet, dans ce dernier cas, de solliciter et de faire travailler ces matériaux composites dans le sens des fibres, en minimisant le cisaillement induit, du fait de la nature des efforts reçus au niveau de la partie formant corps de moyeu et transmis par le mât-moyeu jusqu'au pied de la partie formant mât. Ces efforts sont les efforts centrifuges, qui s'exercent sur les pales du rotor, ainsi que les efforts de battement et les efforts de traînée des pales, qui induisent respectivement un moment et un couple que le mât-moyeu transmet jusqu'à son pied par un chemin bien plus direct que dans les réalisations de mât-moyeu intégré de l'état de la technique.

Afin de donner au mât-moyeu de bonnes caractéristiques de résistance à l'effet d'entaille, (caractère "fail safe") et d'assurer la redondance nécessaire en cas de rupture du corps de moyeu, suite à une crique, dans le cas d'une réalisation métallique, ou à un impact ballistique, le corps de moyeu est avantageusmeent ceinturé d'une sangle en matériau composites, et, à cet effet, l'anneau de renforcement présente avantageusement un logement périphérique s'ouvrant radialement vers l'extérieur et dans lequel est logée une ceinture en matériau composites, à fibres synthétiques ou minérales unidirectionnelles à haute résistance mécanique, bobinées et agglomérées par une résine synthétique et durcie.

Dans un premier exemple de réalisation, dont la structure est simplifiée, l'anneau de renforcement est un anneau circulaire en saillie radialement vers l'extérieur du corps de moyeu. Dans ce cas, il est particulièrement avantageux, pour simplifier encore la fabrication, que le corps de moyeu et la mât soient constitués par une unique pièce tubulaire à symétrie de révolution.

Mais il est également possible, en particulier afin que le corps de moyeu présente une excellente rigidité, lui permettant de prendre en charge les efforts centrifuges provenant des pales d'un rotor principal équipé d'un tel mât-moyeu, que l'anneau de renforcement présente une forme sensiblement polygonale et fasse saillie radialement d'une part vers l'extérieur du corps de moyeu, sensiblement aux niveaux de portions de l'anneau de renforcement situées axialement en regard des ouvertures du corps de moyeu, et, d'autre part, vers l'intérieur du corps de moyeu, sensiblement aux niveaux des portions de l'anneau de renforcement situées axialement entre deux ouvertures voisines du corps de moyeu.

Pour l'équipment d'un rotor arrière, le mât-moyeu intégré peut être tel que son mât, son corps de moyeu et son anneau de renforcement soient métalliques, l'anneau de renforcement ayant, par exemple, une section transversale sensiblement en forme de quadrilatère rectangle, et n'étant pas entouré d'une ceinture en composite. Un tel mât-moyeu peut être facilement réalisé, en acier ou en titane, à partir d'une ébauche matricée ou forgée.

Par contre, pour l'équipement d'un rotor principal, si le mât, le corps de moyeu et l'anneau de renforcement sont métalliques, il est particulièrement indiqué d'entourer l'anneau d'une ceinture en composite, pour les raisons mentionnées précédemment, mais il est également possible de réaliser le mât et le corps de moyeu en matériau composite à fibres de haute résistance mécanique agglomérées par une résine synthétique durcie, soit par bobinage de stratifils de carbone ou de Kevlar (marque déposée) préimprégnés d'une résine époxyde qui est ensuite polymérisée et durcie, soit par drapage de tissus de fibres de carbone ou de Kevlar préimprégnés d'une résine époxyde, puis moulage sous pression et polymérisation à chaud de la résine, les ouvertures étant ultérieurement usinées dans le mât-moyeu. Dans ces dernier cas, l'anneau de renforcement peut être métallique et entouré d'une ceinture en composite, mais il est nettement avantageux que l'anneau soit intégralement réalisé en matériaux composites à fibres synthétiques ou minérales unidirectionnelles à haute résistance mécanique bobinées et agglomérées dans une résine synthétique durcie, et d'une seule pièce avec le corps de moyeu.

Afin de réduire la traînée aérodynamique du moyeu, l'extrémité du corps de moyeu du côté opposé au mât peut avantageusement être recouverte d'un chapeau solidarisé au corps de moyeu et destiné à supporter une coupole circulaire de carénage aérodynamique du moyeu, ledit chapeau présentant sur son pourtour des ouvertures radiales symétriques, par rapport au plan transversal médian de l'anneau de renforcement des ouvertures pratiquées dans le corps de moyeu, lesdits ouvertures radiales du chapeau étant destinées à être traversées par chacune des branches supérieures de la pièce intermédiaire de liaison avec la pale et à en permettre les libres débattements angulaires en pas, battement et traînée. De préférence, les ouvertures radiales du chapeau, qui est métallique ou en matériau composite, sont identiques les unes aux autres et occupent des positions sensiblement symétriques de celles des ouvertures du corps de moyeu, par rapport à l'anneau de renforcement.

Afin de limiter les batttements des pales du rotor d'un côté au moins de leur plan de rotation, le mât-moyeu comprend avantageusement au moins une butée de battement centrale, interne au mât-moyeu et maintenue par un suppport coaxial au mât-moyeu et logé dans ce dernier.

Dans un exemple de réalisation destiné à l'équipement d'un rotor principal d'hélicoptère, la butée de battement centrale comprend un anneau réciproque rigide, destiné à former une butée basse limitant les battements des pales du rotor vers le bas, et monté latéralement coulissant dans une logement circulaire en forme de U s'ouvrant radialement vers l'extérieur, et fixé au support à un niveau axial situé entre le mât et les ouvertures du corps de moyeu. Ainsi, du fait de sa disposition interne au mât-moyeu, le diamètre, et donc, la masse, de l'anneau réciproque sont inférieurs à ce qu'ils seraient si cet anneau réciproque était monté autour du mât-moyeu, comme cela est le cas dans l'état de la technique.

Dans un autre exemple de réalisation, destiné à l'équipement d'un rotor arrière d'hélicoptère, la butée de battement centrale est une pièce axialè de section transversale circulaire dont la face latérale externe présente une portée de glissement concave délimitée entre deux surfaces d'appui contre chacune desquelles est destiné à venir en butée, lors des déplacements angulaires extrêmes de battements de chaque pale d'un côté ou de l'autre du plan de rotation des pales, l'un de deux becquets solidaires en mouvement du pied de la pale correspondante et entre lesquels est délimitée une portée de glissement en forme de calotte sphérique convexe, destinée à coopérer avec la portée de glissement concave de la butée de battement. Dans cet exemple comme dans le précédent, la disposition du dispositif à butées de battement à l'intérieur du mât-moyeu réduit la vulnérabilité de la tête de rotor.

Dans le cas où le mât-moyeu est équipé d'un chapeau, le support de la butée de battement centrale est avantageusement évasé et porte la butée de battement à son extrémité resserrée, tandis qu'il est fixé au chapeau par son extrémité évasée. Mais, avec ou sans chapeau sur le mât-moyeu, il est également possible que le support de la butée de battement centrale comprenne une portée tubulaire sensiblement tronconique d'appui contre la face interne du mât et un voile de centrage tubulaire, également sensiblement tronconique, qui est solidaire de la portée d'appui et supporte la butée de battement.

Afin de faciliter l'accouplement au corps de moyeu des extrémités internes d'amortisseurs de traînée associés aux pales d'un rotor équipé d'un mât-moyeu intégré selon l'invention, des attaches d'accouplement, en nombre égal au nombre des pales, sont de préférence portées par l'anneau de renforcement, chaque attache étant en saillie radialement vers l'extérieur du corps de moyeu et portée par une portion de l'anneau de renforcement qui est située entre deux ouvertures du corps de moyeu. Chaque attache peut être formée par une chape dont les deux branches sont d'une seule pièce avec l'anneau de renforcement, mais il est également possible que chaque attache soit constituée d'au moins une pièce rapportée sur l'anneau de renforcement. Dans ce dernier cas, chaque attache est avantageusement fixée entre deux évidements d'allègement ménagés dans cet anneau.

L'invention a également pour objet une tête de rotor, pour rotor de giravion, du type comportant un mât-moyeu intégré, destiné à être entraîné en rotation autour de l'axe du rotor par l'une de ses parties formant un mât, et présentant une partie format un corps de moyeu, et à laquelle des pales de rotor sont reliées chacune par l'intermédiaire, d'une part, d'organes de retenues et d'articulation ayant une armature radiale externe fixée à la partie formant corps de moyeu et une armature radiale interne fixée aux extrémités internes de deux branches plates inférieure ou supérieure d'une pièce intermédiaire de liaison avec la pale et d'autre part, d'un amortisseur de traînée dont les extrémités sont articulées par des rotules l'une sur la pièce intermédiaire ou le pied de la pale correspondante, et l'autre en un point du corps de moyeu, et la tête de rotor selon l'invention se caractérise en ce que le mât-moyeu intégré est un mât-moyeu tel que présenté ci-dessus, les organes de retenue et d'articulation sont logés à l'intérieur du corps de moyeu et sont fixés en appui par leur armature externe contre la face interne de l'anneau de renforcement et l'une des deux branches plates inférieure et supérieure de chaque pièce intermédiaire traverse l'une des ouvertures du corps de moyeu, l'autre branche traversant éventuellement une ouverture correspondante formée dans un chapeau recouvrant, le cas échéant, l'extrémeif du corps de moyeu du côté opposé au mât. L'ouverture de l'extrémité du corps de moyeu du côté opposé au mât doit être suffisante pour permettre l'introduction des organes de retenue et d'articulation à l'intérieur du corps de moyeu, et la section transversale interne de ce corps de moyeu, au niveau de l'anneau de renforcement, doit être suffisante pour la disposition des organes de retenue et d'articulation en appui par leur armature externe contre l'anneau de renforcement ou la face interne du corps de moyeu au niveau de l'anneau de renforcement, et pour la fixation des extrémités internes des deux branches des parties d'attaches fourchues des pales sur les armatures internes des organes de retenue et d'articulation, d'où l'intérêt de donner une forme sensiblement convexe au corps de moyeu ou à l'ensemble constitué par l'assemblage du corps de moyeu et d'un chapeau correspondant. Pour cette raison, même si le mât est tronconique et converge vers son pied, le diamètre du mât-moyeu peut toujours être suffisamment important pour que les contraintes dues au couple et au moment (induits respectivement par les efforts de traînée et de battement sur les pales) soient faibles. Cette disposition des organes de retenue et d'articulation dans le corps de moyeu considérablement, dans le mât-moyeu, les contraintes de flexion et de cisaillement dues aux efforts tranchants alternés, au niveau de ces organes, surtout si ces derniers sont constitués, pour chaque pale, par une butée sphérique lamifiée fixée sur le corps de moyeu de sorte que son centre de rotation se trouve sensiblement dans l'épaisseur de l'anneau de renforcement. De plus, dans les réalisations dans lesquelles une ceinture en composite entoure l'anneau de renforcement, les efforts centrifuges en provenance des pales sont pris en charge et équilibrés entre lesdites pales par la ceinture composite, travaillant en traction, et ainsi ces efforts ne sollicitent pratiquement pas le mât-moyeu. En outre, comme son diamètre reste toujours relativement grand, au moins au niveau du corps de moyeu, le mât-moyeu ne subit que de faibles contraintes de torsion dues au couple moteur, qui est transmis au pied du mât pour entraîner le mât-moyeu en rotation. De plus, il est à noter que les efforts tranchants de battement passent directement des organes de retenue et d'articulation au pied du mât-moyeu, en suivant un trajet pratiquement en ligne droite, et avec des contraintes modérées de traction/compression.

Enfin, la disposition de la tête de rotor selon l'invention permet de rapprocher au maximum les organes de retenue et l'articulation de l'axe du rotor, puisque le volume central de la partie formant corps de moyeu n'est pas occupé par de la matière. Cette mesure technique conduit non seulement à un encombrement réduit du mât-moyeu, d'où une masse et une traînée aérodynamique également réduites, mais également à un niveau d'excitation vibratoire plus faible, car l'excentricité de battement est plus faible, par comparaison avec les résultats de l'état de la technique présentés ci-dessus.

Afin d'assurer un transfert des efforts et moments par des appuis directs, l'armature externe des organes de retenue et d'articulation de chaque pale est avantageusement conformée, vers l'extérieur, en étrier qui coiffe l'anneau de renforcement et maintient les organes de retenue et d'articulation correspondants en place à l'intérieur du corps de moyeu.

Dans le cas d'un rotor principal, si la butée de battement centrale du mât-moyeu intégré est un anneau réciproque, afin de limiter les battements vers le bas de chaque pale par appui contre l'anneau réciproque monté à l'intérieur du mât-moyeu, un talon rigide est avantageusement solidarisé à la branche inférieure de la partie d'attache fourchue de la pale correspondante par au moins un organe de fixation assurant simultanément la fixation des extrémités internes des deux branches de cette partie d'attache fourchue à l'armature interne des organes de retenue et d'articulation correspondants.

Par contre, dans le cas d'un rotor arrière équipé d'un mât-moyeu mumi d'une butée de battement centrale à portée de glissement concave entre deux surfaces d'appui, l'armature interne des organes de retenue et d'articulation de chaque pale présente, sur sa face radiale interne, un évidement dont le fond constitue une portée de glissement en forme de calotte sphérique convexe délimitée entre deux becquets, la portée de glissement convexe et les deux becquets coopérant respectivement avec la portée de glissement concave et les deux surfaces d'appui de la butée de battement centrale, afin de limiter les battements de la pale correspondante des deux côtés du plan de rotation des pales.

De plus, sur la tête derotor conforme à l'invention, l'organe de rappel élastique et d'amortissement en traînée, prévu pour chaque pale du rotor, est avantageusement monté à l'extérieur du corps de moyeu, entre l'une des attaches d'accouplement portées par l'anneau de renforcement et une autre attache d'accouplement portée par la partie d'attache fourchue ou le pied de la pale correspondante. Pour chaque pale du rotor, la tête de rotor selon l'invention comprend également un levier de commande de l'incidence de la pale, et ce levier est solidaire en mouvement de la partie d'attache fourchue correspondante.

Lorsqu'il n'est pas nécessaire que les pales du rotor puissent se "replier" dans le plan du rotor, il est avantageux, de manière connue en soi, que la partie d'attache fourchue de chaque pale soit directement intégrée au pied de cette pale. Par contre, si les pales doivent être repliables, et de manière également connue en soi, la partie d'attache fourchue de chaque pale est un manchon d'attache sensiblement radial, conformé, à son extrémité interne, en chape dont les deux branches sont fixées à l'armature interne des organes de retenue et d'articulation correspondants, et également conformé, à son extrémité externe, en chape de fixation au pied de la pale correspondante par deux axes sensiblement parallèles à l'axe de rotation du rotor et dont l'un est amovible, afin de permettre le repliage de la pale par pivotement autour de l'autre axe.

Quelle que soit la configuration adoptée, on constate que la tête de rotor selon l'invention est constituée d'un petit nombre de pièces ayant toutes des formes relativement simples et adaptées aux efforts à subir, ce qui permet de diminuer la masse et les coûts de fabrication et d'entretien de cette tête de rotor, tout en améliorant sa stabilité et en diminuant les vibrations, ce qui est un facteur de sécurité et de fiabilité. Comme, de plus, l'encombrement d'un tête de rotor selon l'invention est limité du fait du logement des organes de retenue et d'articulation et du dispositif à butées de battement dans le mât-moyeu intégré, la traînée aérodynamique est réduite, et l'ensemble de ces résultats avantageux concourt à augmenter les performances d'un hélicoptère équipé d'une telle tête de rotor, tant au niveau de son ou ses rotors principaux ou sustentateurs, qu'au niveau de son rotor arrière ou anti-couple.

L'invention sera mieux comprise à l'aide de la description donnée ci-dessous d'exemples particuliers de réalisation, décrits à titre non limitatif, en référence aux dessins annexés sur lesquels:

la figure 1 est une vue schématique en coupe axiale d'une tête de rotor arrière tripale d'hélicoptère, équipée d'un premier exemple de mât-moyeu intégré associé à trois pales non repliables,

la figure 2 est une vue partielle de côté du mât-moyeu de la tête de rotor représentée sur la figure 1,

la figure 3 est une vue schématique en élévation en bout de la tête de rotor de la figure 1 après enlèvement du chapeau recouvrant le corps de moyeu.

la figure 4 est une vue schématique en demi-coupe axiale sur la demi-vue de gauche et en partie en élévation latérale et en coupe décalée sur la demi-vue de droite, pour une tête de rotor principale quadripale d'hélicoptère, équipée d'un second exemple de mât-moyeu intégré associé à quatre pales repliables,

la figure 5 est une vue schématique partielle en partie en coupe et en partie en plan de la tête de rotor de la figure 4,

la figure 6 est une vue analogue à la figure 4 pour une autre tête de rotor principale et quadripale équipée d'un trosième exemple de mât-moyeu intégré, et

la figure 7 est une vue analogue à la figure 5 pour la tête de rotor représentée sur la figure 6.

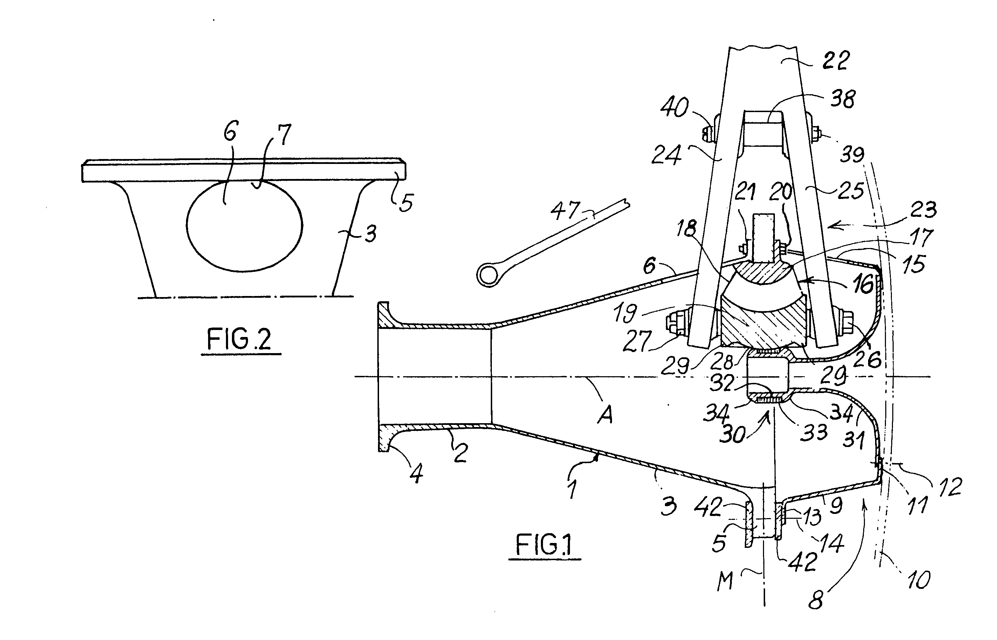

En référence à la figure 1, la tête de rotor arrière comporte un mât-moyeu intégré 1, essentiellement constitué d'un corps tubulaire monobloc, à symétrie de révolution autour d'un axe A, et dont la partie interne (par rapport au plan longitudinal de symétrie de l'hélicoptère, non représenté mais perpendiculaire à l'axe A sur la gauche de la figure 1) forme un mât tubulaire 2, tandis que sa partie externe forme un corps de moyeu tubulaire 3. La partie formant mât 2 présente une forme générale extérieure cylindrique à section circulaire, et son extrémité axiale interne est conformée en pied 4 constituée par une bride annulaire de section transversale rectangulaire, en saillie radialement vers l'extérieur du mât 2. Par ce pied 4, le mât 2 est fixé, à l'aide d'une couronne de boulons (non représentés) à un organe tubulaire (également non représenté) d'encastrement sur une boîte de transmission auxiliaire, montée à l'arrière de l'hélicoptère, et d'entraînement du mât-moyeu 1, et donc du rotor, en rotation autour de l'axe A, qui est également l'axe de rotation du rotor. Par son extrémité externe, le mât 2 se raccorde à la partie formant corps de moyeu 3 et se prolonge directement par cette partie 3, qui présente une forme générale extérieure sensiblement tronconique et s'évase de son extrémité axiale interne, adjacente au mât 2, à son extrémité axiale externe, libre, surépaissie localement et périphériquement en anneau circulaire de renforcement 5, de section transversale rectangulaire, en saillie radialement vers l'extérieur du corps de moyen 3, et dont le bord radial et axial externe est chanfreiné. L'anneau de renforcement 5 entour ainsi l'ouverture circulaire de l'extrémité externe libre du corps de moyeu 3. Le corps tubulaire monobloc constitué par le mât 2 avec son pied 4 et par le corps de moyeu 3 avec son anneau 5 est métallique, par exemple en acier ou en titane, et est réalisé à partir d'une ébauche forgée ou matricée. Des ouvertures radiales 6, identiques et en nombre égale au nombre des pales du rotor, donc trois ouvertures 6 dans cet exemple, sont pratiquées dans la portion du corps de moyeu 3 qui est directement adjacente à l'anneau de renforcement 5 et sont régulièrement réparties en direction circonférentielle sur le pourtour de cette portion. Chaque ouverture 6 a une forme sensiblement en demi-lune ou en haricot très arrondie, dont la concavité générale est tournée vers l'anneau de renforcement 5. Dans sa partie centrale, le bord axial externe 7 de chaque ouverture 6 est rectiligne et délimité par la face axiale interne de l'anneau 5. De plus, les extrémités en direction circonférentielle de toutes les ouvertures 6 se trouvent dans un même plan traversal perpendiculaire à l'axe A. L'extrémité axiale externe du corps de moyeu 3, présentant l'anneau 5, est recouverte par un chapeau 8 constitué d'une paroi latérale sensiblement tronconique 9 et d'une coupole 10 circulaire, légèrement bombée et présentant sa concavité vers le corps de moyeu 3. La coupole 10, destinée à réduire la traînée aérodynamique du rotor, surtout au niveau du moyeu et du pied des pales, s'étend radialement bien au-delà de la paroi latérale 9 qui présente, du côté de sa petite pase, en position axiale externe, une bride périphérique 11, rabattue radialement vers l'intérieur et contre la face externe de laquelle la coupole 10 est fixée par une couronne d'ensemble vis-écrou d'axes 12. Du côté de sa grande base, la paroi latérale 9 du chapeau est solidarisée coaxialement au corps de moyeu 3 en étant fixée à l'anneau 5. A cet effet, la paroi latérale 9 présente trois brides 13 en arc de cercle, identiques et rabattues radialement vers l'extérieur à partir de la grande base de la paroi 9, et régulièrement réparties sur le pourtour de cette grande base, en étant chacune séparée des deux autres brides par une échancrure 15 ménagée dans la paroi 9 et ayant une forme sensiblement symétrique de celle des ouvertures 6 par rapport au plan transversal médian M de l'anneau 5. Le chapeau 8 est fixé au corps de moyeu 3 par des ensembles vis-écrous d'axes 14 liant les trois brides 13 à l'anneau 5, dans une position telle que chacune des trois échancrures 15, radiales, identiques les unes aux autres et arrondies, à concavité générale tournée vers l'anneau 5, se trouve axialement en regard de l'une des trois ouvertures identiques 6, en étant séparée de celle-ci par l'épaisseur de l'anneau 5. La face axiale externe de l'anneau 5 délimite ainsi avec les trois échancrures de la paroi 9 trois ouvertures radiales 15 dont chacune est sensiblement symétrique de l'une des trois ouvertures 6 par rapport à l'anneau 5. Le mât-moyeu 1 avec son chapeau 8 présente ainsi trois paires d'ouvertures radiales 6—15 régulièrement réparties sur son pourtour, les deux ouvertures 6, 15 de chaque paire étant axialement espacées de part et d'autre de l'anneau 5 et présentant leur concavité générale tournée l'une vers l'autre, l'ouverture 6 étant une ouverture axiale interne, percée dans le corps de moyeu 3, tandis que l'ouverture 15 est une ouverture axiale externe percée dans le chapeau 8.

Chacune des trois pales du rotor est reliée à la partie formant corps de moyeu 3 par des organes de retenue et d'articulation. Ces derniers peuvent avantageusement comprendre au moins une butée sphérique lamifiée logée dans le corps de moyeu 3. Ces organes permettent l'articulation de la pale sur le moyeu 3 autour de ses trois axes de battement, de traînée et de changement de pas, qui se coupent au point de rotulage déterminé par le centre de rotation de la butée sphérique lamifiée correspondante. Cet organe est un composant désormais bien connu, comprenant essentiellement une partie centrale lamifiée, constituée d'un empilement de couches en forme de calottes sphériques et alternativement rigides, par exemple métalliques, et en un matériau élastique, tel qu'un caoutchouc synthétique, par exemple en élastomère de silicone, cette partie centrale lamifiée étant vulcanisée entre deux armatures rigides, par exemple métalliques.

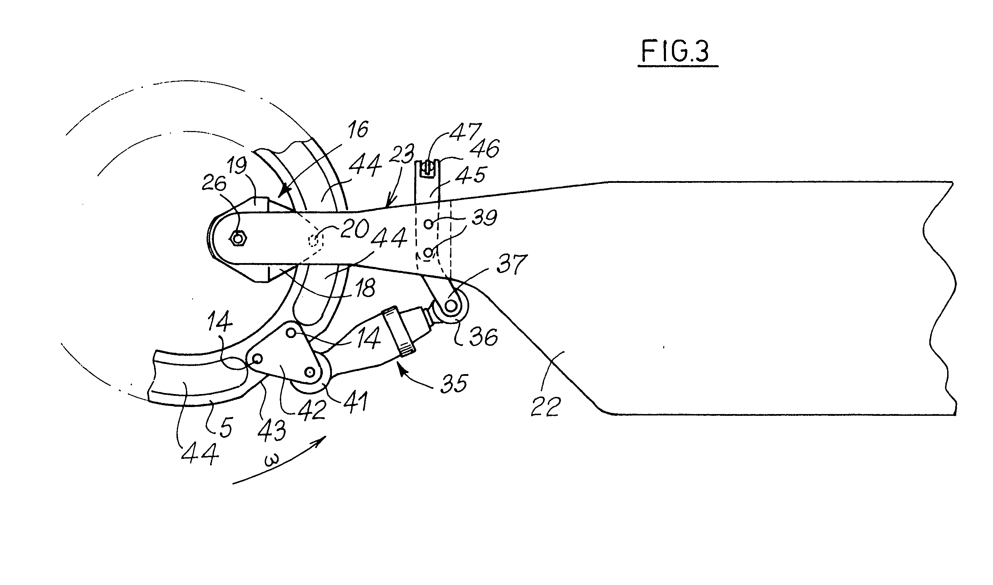

Dans l'exemple de réalisation représenté sur les figures 1 et 3, chaque butée lamifiée sphérique 16 est appliquée contre la face radiale interne de l'anneau de renforcement 5, entre les deux ouvertures 6 et 15 d'une paire d'ouvertures correspondantes, et la butée 16 est fixée contre l'anneau 5 par son armature radiale externe 17, conformée, dans sa partie externe, en étrier ouvert vers l'extérieur afin de chevaucher partiellement les faces axiales interne et externe de l'anneau 5, ce qui assure par simple appui le transfert des efforts et moments sur l'anneau 5. Par sa partie radiale interne, de forme convexe, l'armature externe 17 est solidaire de la face externe concave de la partie centrale lamifiée 18 de cette butée 16, tandis que cette partie centrale lamifiée 18 est solidaire, par sa face interne convexe, de la partie radiale externe concave de l'armature interne 19. La butée sphérique 16 est disposée sous le chapeau 8 et à l'intérieur de l'ouverture de l'extrémité axiale externe du corps de moyeu 3, de sorte que son centre de rotation soit situé dans le plan médian M de l'anneau 5 et dans l'épaisseur de ce dernier, à proximité de sa face radiale externe, et la butée 16 est retenue en position à l'aide d'un boulon 20 introduit parallèlement à l'axe A et de l'extérieur du corps de moyeu 3 dans des trous alignés et percés dans l'anneau 5 et dans les deux branches de l'étrier de l'armature externe 17, un écrou 21 freiné ou goupillé étant vissé et retenue sur l'extrémité filetée de la tige du boulon 20 qui fait saillie du côté de l'ouverture 6.

Le pied de chaque pale 22 est conformé en partie d'attache fourchue 23 à deux branches axialement écartées, dont la branche interne 24 traverse l'ouverture interne 6 correspondante, et dont la branche externe 25 traverses l'ouverture externe 15 correspondante, les extrémités radiales internes des deux branches 24 et 25 étant fixées contre l'armature interne 19 de la butée sphérique 16 par un boulon 26, qui traverse axialement de l'extérieur des trous alignés percés dans l'armature interne 19 et dans ces extrémités internes des branches 24 et 25, la téte du boulon 26 étant en appui contre la face axiale externe de la branche externe 25, et un écrou 27 étant vissé et retenu par une goupille sur l'extrémité filetée de la tige du boulon 26 qui dépasse de la face axiale interne de l'extrémité radiale interne de la branche interne 24.

L'armature interne 19 reliant le pied fourchu 23 de la pale 22 à la butée sphérique 16 fait également fonction d'entretoise maintenant les deux branches 24 et 25 écartées avec un écartement constant.

Pour limiter les battements de la pale 22 de chaque côté du plan de rotation du rotor, sensiblement confondu avec le plan transversal M, un évidement dont le fond consitute une portée de glissement 28 en forme de calotte sphérique convexe, est ménagé dans la face radiale interne de l'armature interne 19 de la butée sphérique lamifiée 16. Cette portée de glissement convexe 28 est délimitée sur cette face interne de l'armature 19 entre deux becquets 29 présentant chacun une face d'appui inclinée et tournée vers l'intersection de l'axe A et du plan transversal M. La portée de glissement 28 et les deux becquets 29 coopèrent avec une butée de battement centrale 30, qui est montée coaxialement à l'intérieur du mât-moyeu 1 grâce à un support tubulaire évase 31. Par son extrémité axiale externe la polus évasé 31. Par son extrémité axiale externe la plus évasée, ce support 31 est fixé contre la face axiale interne de la bride périphérique 11 de la paroi latérale 9 du chapeau 8, à l'aide des ensembles vis-écrous d'axes 12 qui fixent également le disque 10 sur la paroi latérale 9, tandis que l'extrémité axiale interne la plus resserrée du support 31 est solidaire de la butée de battement 30. Celle-ci est une pièce tubulaire à section transversale circulaire qui est entourée d'un palier auto-lubrifiant 32, en forme de manchon dont la face latérale ou radiale externe constitue une portée de glissement 33 concave, à courbure complémentaire de celle de la portée convexe 28. Le palier 32 est logé dans un évidement circulaire ménagé dans la face radiale externe de la pièce tubulaire, entre deux surfaces annulaires d'appui 34 inclinées et tournées radialement vers l'extérieur et chacune vers l'un des deux becquets 29. Le dispositif à butées de battement ainsi réalisé, qui est également interne au mât-moyeu 1, est tel que pour les déplacements angulaires extrêmes de battement autorisés pour la pale 22 d'un côté ou de l'autre du plan de rotation du rotor, l'un des becquets 29 vient en butée contre la surface d'appui 34 en regard sur la butée de battement centrale 30, après glissement de la portée convexe 28 sur la portée concave 33 du palier 32 de cette butée centrale 30.

L'amortissement de chaque pale 22 en traînée et le rappel élastique de celle-ci sur son axe neutre sont assurés par un organe externe au mât-moyeu 1 et disposé latéralement entre l'anneau de renforcement 5 du corps de moyeu 3 et le pied de pale 23. Cet organe, appelé amortisseur de traînée, contre-fiche de rappel élastique en traînée à amortissement incorporé ou même adaptateur de fréquences, est un organe 35 constitué dans cet exemple de tubes coaxiaux entre lesquels est incorporé un manchon cylindrique en un matériau visco-élasstique, mais cet organe 35 pourrait être un organe hydraulique ou encore un organe constitué d'un empilement alterné de plaques rigides et de plaques d'aun matériau viscoélastique. Cet organe 35 est accouplé, à ses extrémités, par des rotules d'une part sur le pied de pale 23 et d'autre part sur l'anneau de renforcement 5. La rotule 36 de l'extrémité en position radiale externe de l'amortisseur 35 est montée entre les deux ailes parallèles d'une chape d'attache 37 en saillie par rapport au pied de pale 23 du côté du bord de fuite de la pale 22 correspondante, et portée latéralement par une entretoise 38 engagée entre les deux branches 24 et 25 du pied d'attache fourchu de la pale 22 correspondante, au niveau des extrémités radiales externes de ces deux branches 24 et 25, auxquelles l'entretoise 38 est fixée par deux ensembles à boulon 39 et écrou 40 freiné ou goupillé, dont les boulons 39 traversent des trous en regard percés dans les branches 24 et 25 et dans l'entretoise 38. La rotule 41 de l'extrémité en position radiale interne de l'organe de rappel élastique et d'amortissement en traînée 35 est montée entre deux ferrures d'attache 42, triangulaires et parallèles, fixées l'un contre la face axiale externe et l'autre contre la face axiale interne d'une portion d'anneau 5 située entre deux paires d'ouvertures 6—15, et au niveau de laquelle un méplat 43 est usiné dans la face radiale externe de l'anneau 5. Les deux ferrures 42 d'une même attache sont fixées à l'anneau 5 par deux des ensembles vis-écrou d'axe 14 qui fixent simultanèment les brides 13 de la paroi 9 du chaueau 8 à l'anneau 5, dans une portion également située entre deux évidements d'allègement 44 ménagés dans les faces axiales interne et externe de la partie formant l'âme de l'anneau 5, comme représenté sur la figure 3, qui montre que le boulon 20 de fixation à l'anneau 5 de l'érier de l'armature externe 17 de fixation à l'anneau 5 de l'étrier de l'armature externe 17 de chaque butée lamifiée sphérique 16 traverse également une portion d'anneau 5 située entre deux évidements d'allègement 44. La disposition de la chape 37 et des ferrures d'attache 42 donne à chaque organe de rappel élastique et d'amortissement 35 une orientation sensiblement tangentielle à l'anneau de renforcement 5.

Du côté du bord d'attaque de chaque pale 22, le pied de pale 23 porte également un levier 45 de commande de l'incidence de la pale. Ce levier 45 prolonge l'entretoise 38 du côté opposé à la chape 37 et se termine par une chape 46 dans laquelle s'articule, par une rotule, une extrémité d'une biellette 47 de commande du pas de la pale 22 correspondante. Il est à noter que la biellette de commande de pas 47 peut être remplacée par un embiellage au moins partiellement logé dans le mât-moyeu 1, en profitant de la structure tubulaire de ce dernier, et en améliorante ainsi la protection des différents composants de la tête de rotor.

Sur la tête de rotor arrière ainsi constituée, l'anneau de renforcement 5 reprend en traction les efforts centrifuges s'exerçant sur les pales 22 pour les équilibrer entre elles, ces efforts centrifuges ne solicitant pratiquement pas le mât-moyeu 1 lui-même. Les efforts tranchants alternés au niveau des butées sphériques 16 induisent dans le mât-moyeu 1 des contraintes de flexion et de cisaillement relativement faibles, et notamment les efforts de battement transférés aux butées sphériques 16 passent de celles-ci à l'anneau 5 et de ce dernier au mât-moyeu 1 directement jusqu'à son pied 4, avec des contraintes de traction/compression modérées.

Cette disposition de tête de rotor permet de rapprocher les butées sphériques 16, ainsi que le dispositif à butée centrale de battement 30 de l'axe A du rotor, sans gêner les mouvements des pales 22 par rapport au mât-moyeu 1, autour des centres de rotation des butées sphériques 16, grâce au passage et aux débattements des branches interne 24 et externe 25 dans les ouvertures interne 6 et externe 15 ménagées respectivement dans le corps de moyeu 3 et dans le chapeau 8. Cette disposition conduit donc à un encombrement réduit, et à un moindre poids ainsi qu'à une moindre traînée aérodynamique, et à un faible niveau d'excitation vibratoire du fait que l'excentricité de battement est faible.

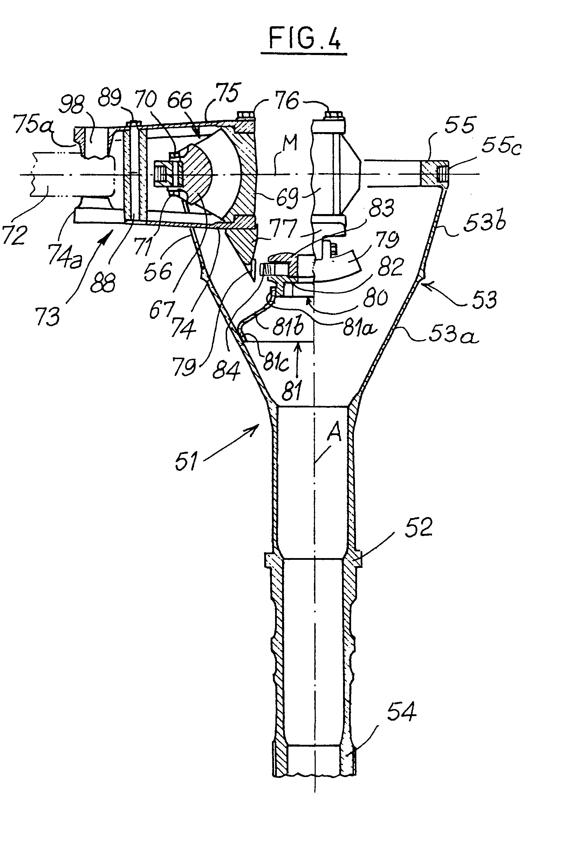

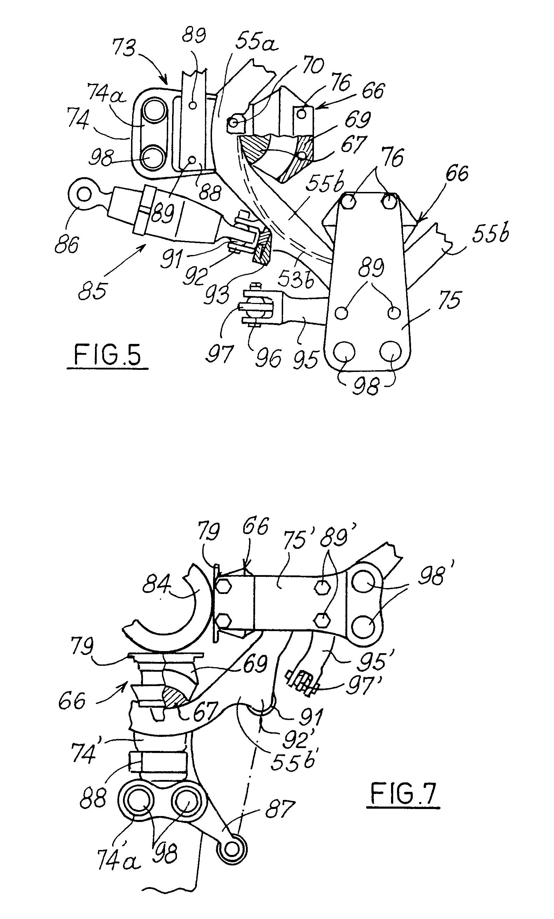

Le second exemple de tête de rotor représenté sur les figures 4 et 5 est destiné à un rotor principal quadripale d'hélicoptère, et présente de nombreuses caractéristiques en commun avec la tête de rotor décrite ci-dessus en référence aux figures 1 à 3, de sorte que la description qui suit concerne principalement les différences entre ces deux exemples de tête de rotor.

La tête de rotor des figures 4 et 5 comprend un mât-moyeu intégré 51, comportant une partie inférieure tubulaire d'axe sensiblement vertical A, formant un mât 52 de forme sensiblement cylindrique de section circulaire, dont la surface latérale externe présente des portées cylindriques de liaison à la partie supérieure de la boîte de transmission principale de l'hélicoptère, pour transférer au fuselage de ce dernier les efforts et moments en provenance du rotor, et l'extrémité inférieure du mât 52 est conformée an pied cannelé 54, par lequel le mât-moyeu 51 est encastré dans la boîte de transmission principale et entraîne en rotation autour de l'axe A. Le mât-moyeu 51 comporte également une partie supérieure formant corps de moyeu 53, qui est également tubulaire et prolonge le mât 52, coaxialement à ce dernier. Dans cet exemple, le corps de moyeu 53 est constitué de deux parties tronconiques 53a et 53b solidaires et superposées bout à bout, la partie tronconique inférieure 53a se raccordant par sa petite base à son extrémité inférieure à l'extrémité supérieure du mât 52, et ayant un angle de conicité supérieur à celui de la partie tronconique supérieure 53b, qui se raccorde par sa petite base, à son extrémité inférieure, à la grande base à l'extrémité supérieure de la partie tronconique inférieure 53a, de sorte que le corps de moyeu 53 s'évase de son extrémité inférieure adjacente au mât 52 jusqu'à son extrémité supérieure libre en présentant une forme générale extérieure libre en présentant une forme générale extérieure sensiblement convexe. L'extrémité supérieure libre du corps de moyeu 53 est surépaissie localement et périphériquement en anneau de renforcement 55, de section transversale rectangulaire, et le corps de moyeu 53 avec son anneau 55 et le mât 52 avec son pied 54 sont constitués par unepièce métallique monobloc en acier ou titane réalisée à partir d'une ébauche forgée ou matricée. Mais, dans cet exemple, cette pièce monobloc n'est pas à symétrie de révolution autour de l'axe A, car l'anneau 55, qui entoure l'ouverture de l'extrémité libre du corps de moyeu 53, n'est pas circulaire, mais présente, vu en plan (voir figure 5), une forme sensiblement de polygone pseudo-régulier, à perits côtés 55a égaux, légèrement bombés de forme convexe, alternés avec de grands côtés 55b égaux et rectilignes, et en nombre égal au nombre des pales du rotor. Dans cet exemple de rotor quadripale, l'anneau 55 a sensiblement une forme en plan carrée, délimitée par quatre grands côtés 55b raccordés par quatre sommets arrondis formés chacun par l'un des petits côtés 55a convexes (dont l'un est visible sur la figure 5), ces derniers correspondant aux portions de l'anneau 5 sur lesquelles sont retenues les butées sphériques lamifiées 66, logées dans l'ouverture de l'extrémité supérieure du corps de moyeu 53 et constituant les organes de retenue et d'articulation des pales sur le mât-moyeu 51. Les petits côtés 55a de l'anneau 55 sont radialement en saillie vers l'extérieur par rapport à l'extrémité supérieure adjacente du corps de moyeu 53 (représentée en traits interrompus sur la figure 5), tandis que les grands côtés 55b sont essentiellement en saillie radialement vers l'intérieur. Cette forme particulière de l'anneau 55 permet de lui donner une grande rigidité. De plus, l'anneau 55 présente une gorge périphérique, de section rectangulaire ou carrée, qui s'ouvre dans sa face radiale externe, et une ceinture 55c en matérieur composites est logée dans cette gorge. Cette ceinture 55c est réalisée par bobinage, dans la gorge de l'anneau 55, de stratifils unidirectionnels de carbone ou de Kevlar® préimprégnés d'une résine époxyde puis par polymérisation de la résine qui est durcie. Cette ceinture 55c, comme la gorge qui la loge et l'anneau 55, est symétrique par rapport au plan transversal médian M de l'anneau, qui est perpendiculaire à l'axe A, et elle procure la redondance nécessaire, en cas de rupture du corps de moyeu 53 à la suite d'une critique ou d'un impact balistique, pour la reprise des efforts centrifuges. La ceinture 55c donne de ce fait au mât-moyeu 51 un bon caractère "fail safe" de résistance à l'effet d'entaille. Quatre ouvertures 56, dont la forme et la fonction correspondent à celles des ouvertures 6 de l'exemple précédent, sont pratiquées dans la partie supérieure 53b du corps de moyeu, et chacune directement sous l'un des quatre petits côtés 55a de l'anneau 55. Dans cet exemple, contrairement à l'exemple précédent, l'anneau 55 et l'extrémité supérieure du corps de moyeu 53 ne sont pas recouverts d'un chapeau. Par contre, comme dans l'exemple précédent, chaque pale du rotor est reliée au corps de moyeu 53 par une butée lamifiée sphérique 66, dont le centre de rotulage est situé dans l'épaisseur de la ceinture 55c et dans le plan M. Chaque butée 66 est appliquée contre la face radiale interne d'un petit côté 55a de l'anneau 55, et la butée 66 est fixée sur l'anneau 55 par son armature radiale externe 67, conformée vers l'extérieur en étrier qui vient chevaucher partiellement les faces supérieur et inférieur du petit côté 55a de l'anneau 55, en s'engageant sous ce dernier dand l'ouverture 56 correspondante, et l'armature externe 67 est retenue en position par deux ensembles à boulon 70 et écrou goupillé ou freiné 71, montés côte, pour lesquels le boulon 70 est introduit parallèlement à l'axe A et du haut vers le bas dans des trous alignés et percés dans les deux branches de l'étrier de l'armature 67 et dans l'anneau 55, sans passer dans la ceinture 55c, l'écrou 71 étant vissé sur l'extrémité inférieure filetée de la tige du boulon qui fait saillie vers l'ouverture 56 correspondante.

Comme cet exemple de tête de rotor est destiné à un rotor principal à pales repliables par pivotement sensiblement dans le plan du rotor, sensiblement confondu avec le plan transversal M, l'organe de liaison de chaque pale à l'armature interne 69 de la butée sphérique lamifiée 66 correspondante n'est pas, comme dans l'exemple précédent, une partie d'attache fourchue intégrée au pied de pale, mais le pied 72 de chaque pale (représenté en traits interrompus sur la figure 4) est relié à la butée lamifiée 66 correspondante par une sorte de manchon radial 73, ouvert latéralement et dont les parties d'extrémité interne et externe sont conformées en chapes à deux branches. Dans une forme très simple de réalisation, cet organe de liaison 73 comprend deux plaques radiales sensiblement horizontales, disposées l'une au-dessus de l'autre et symétriques l'une de l'autre par rapport au plan M, la plaque inférieure 74 traversant l'ouverture 56 correspondante, tandis que la plaque supérieure 75 passe au-dessus de l'anneau 55 et de la butée 66. Les deux plaques 74 et 75 sont fixées par leurs extrémités internes sur l'armature interne 69 de cette butée 66, à l'aide de deux boulons 76 montés côté à côte et qui traversent chacun, parallèlement à l'axe A et du haut vers le bas, des trous alignés percés dans l'armature interne 69, qui fait également fonction d'entretoise d'écartement des deux branches 74 et 75, et dans ces extrémités internes des plaques 74 et 75, les têtes des boulons 76 étant en appui contre la face supérieure de la plaque supérieure 75, et les extrémités filetées des tiges des boulons 76 étant vissées dans un support de talon rigide 77 qui se trouve ainsi fixé contre la face inférieure de l'extrémité interne de la plaque inférieure 74. Le pied de pale 72 est engagé entre des doubles paliers 74a et 75a, portés par les extrémités externes des deux plaques 74 et 75, et ce pied de pale est retenu entre eux par deux axes 98, disposés côté à côté et perpendiculairement au plan M, ces axes 98 traversant les doubles paliers alignés 74a et 75a ainsi que des trous alignés dans le pied de pale 72, et l'un des deux axes 98 étant amovible pour permettre le pivotement de la pale correspondante autour de l'autre axe.

Afin de limiter les battements de chaque pale vers le bas, aux vitesses faibles ou nulles de rotation du rotor, les supports 77 portent chacun un talon rigide 79, en arc de cercle, aui est boulonné sur son support 77 de façon à présenter une surface de butée tournée vers l'axe A et qui soit perpendiculaire à l'axe longitudinal de la pale correspondante. Ce talon 79 coopère avec une butée de battement centrale 80 comportant un anneau réciproque 84, réalisé en matériaux composites, à fibres de carbone agglomérées dans une résine durcie, et ceinturé d'une bande d'acier cémenté. Cet anneau réciproque 84 est monté latéralement ou radialement coulissant dans un logement en U ouvert vers l'extérieur et formé par boulonnage d'un organe annulaire supérieur 83, de section transversale en L couché, sur un organe annulaire inférieure 82, de section transversale en T, lui-même emboîté et retenu par des vis (non représentées) dans la partie supérieure cylindrique 81a d'un support 81, composite ou métallique. Celui-ci présente un voile tronconique 81b, divergeant vers le bas, et qui se prolonge par une portée de centrage tronconique 81c, convergeant vers le bas et par laquelle le support 81 est en appui contre la face interne de la partie inférieure 53a du corps du moyeu 53. Le support 81 s'étend coaxialement à l'intérieur du corps de moyeu 53 sur une distance suffisante pour que le logement en U 82—83 et l'anneau réciproque 84 se trouve légèrement en-dessous du niveau des ouvertures 56, de sorte que les talons 79 des pales viennent s'appuyer contre l'anneau réciproque 84, dès que les pales ne sont plus suffisamment sollicitées par la force centrifuge et pivotent vers le bas autour des centres de rotation des butées sphériques 66, d'un angle prédéterminé. Le dispositif de butée basse interne au corps de moyeu 53, et constitué par l'anneau réciproque 84, le logement 82—83 et le support 81, est dimensionné pour encaisser le moment statique des pales, à l'arrêt du rotor.

Un organe de rappel élastique en traînée et d'amortissment 85, de même type que l'organe 35 prévu pour chaque pale dans l'exemple de tête de rotor décrit en référence aux figures 1 à 3, mais dimensionné pour convenir à un rotor principal, est disposé latéralement entre le pied de chaque pale et une portion de l'anneau de renforcement 55 qui est située entre l'organe de liaison radial 73 de la pale correspondante et l'organe de liaison de la pale immédiatement suivante, si l'on considère le sens de rotation du rotor. Cet organe 85 est accouplé par une rotule 86, à son extrémité en position radiale externe, directement sur une attache solidaire du pied de pale, du côté du bord de fuite de la pale correspondante, et une rotule 91, à son extrémité en position radiale interne, est retenue entre les deux branches d'une chape d'attache 92 boulonnée sur une patte 93 en saillie radialement vers l'extérieur de l'anneau 55, au niveau du milieu du grand côté 55b correspondant de ce dernier, et d'une seule pièce avec cet anneau 55.

De manière similaire à ce qui a été décrit ci-dessus pour le premier exemple, en référence aux figures 1 à 3, une autre entretoise 88 est retenue par deux boulons 89 montés côté à côté entre les parties radiales externes des deux plaques 74 et 75 de chaque organe de liaison radial 73, et cette entretoise 88 se prolonge latéralement, du côté du bord d'attaque de la pale correspondante, par un levier de commande d'incidence 95 dont l'extrémite est accouplée par une rotule 96 à l'extrémité supérieure d'une biellette 97 de commande du pas de la pale correspondante.

Une telle tête de rotor procedure des avantages de même nature que ceux présentés ci-dessus en relation avec l'exemple décrit en référence aux figures 1 à 3. Ces avantages sont principalement la reprise, en traction, par l'anneau 55 et sa ceinture 55c, des efforts centrifuges s'exerçant sur les pales, pour les équilibrer entre elles, la faible sollicitation du mât-moyeu 51, du fait des faibles contraintes de flexion et cisaillement induites par les efforts tranchants alternés au niveau des butées lamifiées 66 et du transfert des efforts verticaux de battement aux butées 66, et de ces dernières à l'anneau 55 et à la ceinture 55c, puis directement au pied 54 du mât 52, avec des contraintes de traction/compression modérées. Ces avantages sont également la réduction de l'encombrement, du poids, de la traînée aérodynamique, du niveau vibratoire et de la vulnérabilité, en raison de la disposition des butées lamifiées 66 et du dispositif à butées de battement dans le mât-moyeu 51, à proximité de l'axe A.

Le montage du rotor est simple: après l'encastrement du mât-moyeu 51 sur la boîte de transmission principale, l'anneau réciproque 84 déjà positionné dans son logement 82—83, lui-même déjà positionné dans son logement 82—83, lui-même déjà fixé sur son support 81, est introduit avec ces derniers dans le mât-moyeu 51, et le support 81 est fixé en position. Puis les butées sphériques 66 sont successivement introduites dans la partie formant corps de moyeu 53 par l'ouverture de diamètre suffisant délimitée par l'anneau 55 à l'extrémité supérieure du corps de moyeu, et elles sont fixées en position contre l'anneau 55. Puis on présente un à un les organes radiaux de liaison 73, et on engage pour chacun la plaque inférieure 74 dans l'ouverture 56 correspondante. On boulonne ensuite les extrémités internes des plaques 74 et 75 sur l'armature interne 69 de la butée lamifiée sphérique 66 correspondante, à l'aide des deux boulons 76 qui se vissent dans le support 77 correspondant. Les pales sont ensuite présentées une à une, et on fixe le pied de chacune à l'organe de liaison 73 correspondant par les deux axes 98. Puis on accouple les organes de rappel élastique en traînée et d'amortissement 85 entre le mât-moyeu 51 et les pieds des pales, et enfin, les leviers de commande de l'incidence 95 aux biellettes de commande 97 correspondantes.

Les opérations de démontage s'effectuent dans l'ordre inverse.

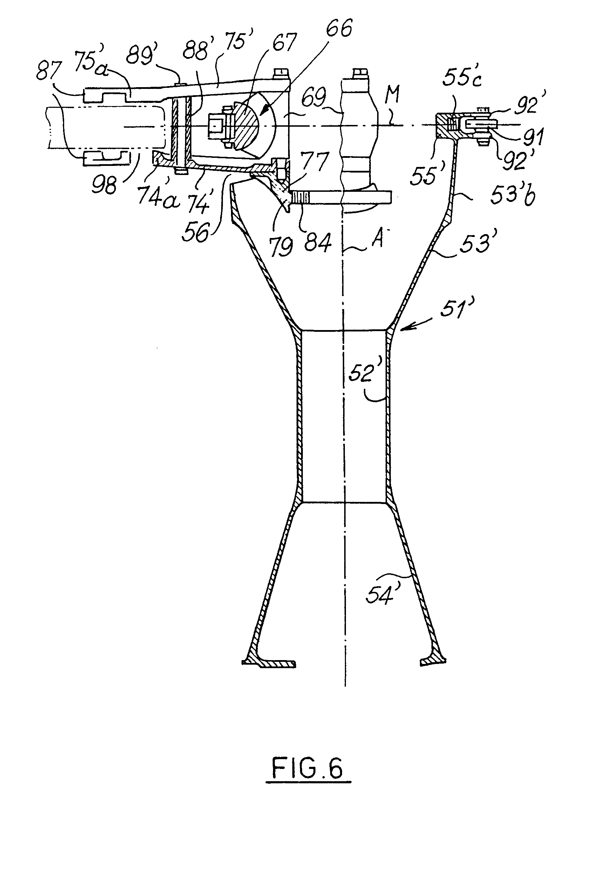

Le troisième exemple de tête de rotor, représenté sur les figures 6 et 7, est également destiné à un rotor principal quadripale à pales repliables, et il ne se distingue de la réalisation représentée sur les figures 4 et 5 que par quatre différences principales, qui sont présentées ci-dessous.

Une première différence est que la partie formant un mât tubulaire et cyclindrique 52' du mât-moyeu 51' se prolonge à son extrémité inférieure par un pied tubulaire 54' qui est sensiblement tronconique et s'évase vers le bas, pour que le diamètre du pied du mât-moyeu puisse être adapté à un dispositif d'entraînement et de montage en rotation comportant au moins un roulement dont la taille choisie est relativement importante sans être prohibitive.

Une seconde différence est que la partie supérieure 53'b du corps de moyeu 53' est très peu évasée et pratiquement cylindrique de section circulaire, ce qui permet de rapprocher encore les butées sphériques lamifiées 66 de l'axe A, tout en conservant une ouverture suffisante à l'extrémité supérieure du mât-moyeu 51', pour l'introduction dans ce dernier de l'anneau réciproque 84 avec son logement en U et son support (non représentés) et des butées sphériques lamifiées 66.

Une troisième différence est que la rotule 91 d'accouplement de l'extrémité radiale interne de chaque organe de rappel élastique en traînée et d'amortissement est retenue dans une chape d'attache dont les deux branches sont deux pattes 92' de forme triangulaire, parallèles l'une à l'autre et l'une au-dessus de l'autre, qui s'étendent en saillie radialement vers l'extérieur de l'anneau de renforcement 55', à partir du milieu d'un grand côté 55'b de ce dernier, les pattes supérieure et inférieure 92' étant d'une seule pièce respectivement avec les bords supérieur et inférieur de l'anneau 55' qui bordent la gorge de ce dernier dans laquelle est logée la ceinture composite 55'c.

La quatrième différence est que la rotule d'accouplement de l'extrémité radiale externe de l'organe de rappel élastique en traînée et d'amortissement est retenue entre deux ferrures 87, sensiblement parallèles l'une à l'autre, qui forment par leur extrémité libre une chape d'attache, et qui sont chacune d'une seule pièce avec l'une des deux plaques inférieure 74' et supérieure 75' de l'organe radial de liaison de la pale correspondante au corps de moyeu 53'. Chaque ferrure 87 s'étend à la fois radialement vers l'extérieur et vers le bord de fuite de la pale correspondante, à partir du double palier 74'a ou 75'a à l'extrémité radiale externe de la plaque 74' ou 75' correspondante.

Enfin, une autre différence, de moindre importance, est que le levier de commande de l'incidence 95', toujours solidaire de l'entretoise 88' fixée par les boulons 89' entre les deux plaques 74' et 75', et en saillie du côté du bord d'attaque de la pale correspondante, est de plus recourbé vers l'anneau 55', afin de rapprocher encore les biellettes de commande du pas 97' du corps de moyeu 53', et simultanément de rapprocher l'articulation de ces biellettes sur les leviers 95' des axes de battement des pales correspondantes, ce qui réduit les couplages entre les battements et les commandes d'incidence des pales.

## Revendications

1. Mât-moyeu intégré pour rotor de giravion, du type comportant une partie tubulaire formant un mât (2, 52) dont une extrémité est conformée en pied (4, 54) par lequel le mât-moyeu (1, 51) est destiné à être encastré sur un organe de transmission et entraîné en rotation autour de l'axe (A) de la partie formant mât, laquelle est solidaire, du côté opposé au pied (4, 54) d'une partie formant corps de moyeu (3, 53) coaxiale à la partie formant mât et qui s'évase de sa portion d'extrémité par laquelle elle est liée au mât (2, 52) à sa portion d'extrémité opposée dont est solidaire un anneau de renforcement (5, 55) formé par une augmentation locale et périphérique de son épaisseur, anneau destiné essentiellement à reprendre et à transmettre dans le mât-moyeu (1, 51) les efforts centrifuges provenant des pales (22, 72) par l'intermédiaire d'organes de retenueg et d'articulation (16, 66) desdites pales, logés à l'intérieur du corps de moyeu (3, 53) et auxquels chacune desdites pales est solidarisée par les deux branches plates, inférieure (24, 74) et supérieure (25, 75) d'une pièce intermédiaire (23, 73) de liaison avec la pale, ledit corps de moyeu étant ajouré par des ouvertures (6, 56) en nombre égal au nombre de pales et régulièrement réparties en direction circonférentielle sur le pourtour dudit corps (3, 53), caractérisé en ce que les ouvertures (6, 56) identiques les unes aux autres sont disposées sur le pourtour du corps de moyeu (3, 53) entre le mât (2, 52) et l'anneau de renforcement (5, 55) pour permettre le passage de chacune des branches inférieures (24, 74) de la pièce intermédiaire (23, 73) de liaison des pales (22, 72) avec leurs organes de retenue et d'articulation (16, 66) correspondants à l'intérieur de l'anneau de renforcement (5, 55) lesdites ouvertures (6, 56) ayant sensiblement, une forme en demi-lune ou en haricot très arrondie, présentant une concavité générale tournée vers l'anneau de renforcement de façon à permettre les débattements angulaires en pas, battement et traînée desdites branches inférieures (24, 74).

2. Mât-moyeu intégré selon la revendication 1, caractérisé en ce que l'anneau de renforcement (55) présente un logement périphérique s'ouvrant radialement vers l'extérieur et dans lequel est logée une ceinture (55c) en matériau composite, à fibres synthétiques ou minérales unidirectionnelles à haute résistance mécanique bobinées et agglomérées par une résine synthétique et durcie.

3. Mât-moyeu intégré selon l'une des revendications 1 et 2, caractérisé en ce que l'anneau de renforcement (5) est un anneau circulaire en saillie radialement vers l'extérieur du corps de moyeu (3).

4. Mât-moyeu intégré selon la revendication 3, caractérisé en ce que le corps de moyeu (3) et le mât (2) sont constitués par une unique pièce tubulaire à symétrie de révolution.

5. Mât-moyeu selon l'une des revendications 1 et 2, caractérisé en ce que l'anneau de renforcement (55) a une forme sensiblement polygonale et fait saillie radialement d'une part vers l'extérieur du corps de moyeu (53), sensiblement aux niveaux des portions (55a) de l'anneau de renforcement (55) situées axialement en regard des ouvertures (56) du corps de moyeu (53), et, d'autre part, vers l'intérieur du corps de moyeu (53) sensiblement aux niveaux des portions (55b) de l'anneau de renforcement (55) situées axialement entre deux ouvertures (56) voisines du corps de moyeu (53);

6. Mât-moyeu intégré selon l'une des revendications 1 à 5, caractérisé en ce que le mât (2), le corps de moyeu (3) et l'anneau de renforcement (5) sont métalliques, et l'anneau de renforcement (5) a une section sensiblement en forme de quadrilatère rectangle.

7. Mât-moyeu intégré selon l'une des revendications 1 à 6, caractérisé en ce que l'extrémité du corps de moyeu (3, 53) du côté opposé au mât (2, 52) est recouverte d'un chapeau (8) solidarisé au corps de moyeu (3, 53) et destiné à supporter une coupole circulaire de carénage aérodynamique du moyeu, ledit chapeau présentant sur son pourtour des ouvertures radiales (15) symétriques, par rapport au plan transversal médian (M) de l'anneau de renforcement (5, 55) des ouvertures (6, 56) pratiquées dans le corps de moyeu (3, 53), lesdites ouvertures radiales (15) du chapeau étant destinées à être traversées par chacune des branches supérieures (25, 75) de la pièce intermédiaire (23, 73) de liaison avec le pale et à en permettre les libres débattements angulaires en pas, battement et traînée.

8. Mât-moyeu intégré selon la revendication 7, caractérisé en ce que les ouvertures radiales (15) du chapeau (8) sont identiques les unes aux autres et occupent des positions sensiblement symétriques de celles des ouvertures (6, 56) du corps du moyeu (3, 53) par rapport à l'anneau de renforcement (5, 55).

9. Mât-moyeu intégré selon l'une des revendications 1 à 8, caractérisé en ce qu'il comprend au moins une butée de battement centrale (30, 80) interne au mât-moyeu (1, 51), destinée à limiter les battements des pales du rotor d'un côté au moins du plan de rotation des pales (M) et maintenue par un support (31, 81) coaxial au mât-moyeu (1, 51) et logé dans ce dernier.

10. Mât-moyeu intégré selon la revendication 9 et destiné à l'équipement d'un rotor arrière d'hélicoptère, caractérisé en ce que butée de battement centrale (30) est une pièce axiale de section transversale circulaire dont la face latérale externe présente une portée de glissement (33) concave délimitée entre deux surfaces d'appui (34) contre chacune desquelles est destiné à venir en butée, lors des déplacements angulaires extrêmes de battement de chaque pale (2) d'un côté ou de l'autre du plan de rotation des pales (M), l'un des deux bequets (29) solidaires en mouvement du pied de la pale correspondante et entre lesquels est délimitée une portée glissement (28) en forme de calotte sphérique convexe, destinée à coopérer avec la portée de glissement concave (33) de la butée de battement (30).

11. Mât-moyeu intégré selon la revendication 9 et destiné à l'équipement d'un rotor principal d'hélicoptère, caractérisé en ce que la butée de battement centrale (80) comprend un anneau réciproque rigide (84), destiné à former une butée basse limitant les battements des pales du rotor vers le bas, et monté latéralement coulissant dans un logement circulaire en forme de U (82—83) s'ouvrant radialement vers l'extérieur, et fixé au support (81), à un niveau axial situé entre le mât (52) et les ouvertures (56) du corps de moyeu (53).

12. Mât-moyeu intégré selon l'une des revendications 10 et 11, caractérisé en ce que le support (31) de la butée de battement centrale (30) est évasée et porte la butée de battement (30) a son extrémité resserrée, tandis qu'il est fixé au chapeau (8) par son extrémité.

13. Mât-moyeu intégré selon l'une des revendications 10 et 11, caractérisé en ce que le support (81) de la butée de battement centrale (80) comprend une portée tubulaire sensiblement tronconique (81c) d'appui contre la face interne du corps de moyeu (53) et un voile de centrage tubulaire (81b), également sensiblement tronconique, qui est solidaire de la portée d'appui (81c) et supporte la butée de battement (80).

14. Mât-moyeu intégré selon l'une des revendications 1 à 13, caractérisé en ce que l'anneau de renforcement (5) porte des attaches (42) en nombre égal au nombre des pales, et destinées chacune à l'accouplement au mât-moyeu (1) de l'extrémité interne d'un organe de rappel élastique en traînée et d'amortissement (35) d'une pale, chaque attache (42) étant en saillie raidalement vers l'extérieur du corps de moyeu (3) et portée par une portion de l'anneau de renforcement (5) située entre deux ouvertures (6) du corps de moyeu (3).

15. Mât-moyeu intégré selon la revendication 14, caractérisé en ce que chaque attache est formée par une chape dont les deux branches (92') sont d'une seule pièce avec l'anneau de renforcement (55').

16. Mât-moyeu intégré selon la revendication 14, caractérisé en ce que chaque attache est une pièce (42) rapportée sur l'anneau de renforcement (5) entre deux évidements d'allègement (44) ménagés dans cet anneau (5).

17. Tête de rotor pour rotor de giravion, du type comportant un mât-moyeu (1, 51) intégré, destiné à être entraîné en rotation autour de l'axe (A) du rotor par l'une de ses parties formant un mât (2, 52), et présentant une partie formant un corps de moyeu (3, 53) et à laquelle des pales (22, 72) de rotor sont reliées chacune par l'intermédiaire, d'une part, d'organes de retenue et d'articulation (16, 66) ayant une armature radiale externe (17, 67) fixée à la partie formant corps de moyeu (3, 53) et une armature radiale interne (19, 69) fixée aux extrémités internes de deux branches plates, inférieure (24, 74) et supérieure (25, 75) d'une pièce intermédiaire (23, 73) de liaison avec le pale, et, d'autre part, d'un organe (35, 85) de rappel élastique en traînée et d'amortissement de la pale, dont les extrémités sont articulées par des rotules, l'une (36, 86) sur la pièce intermédiaire (23, 73) ou le pied de la pale (22, 72) correspondante, et l'autre (41, 91) en un point du corps de moyeu (3, 53) caractérisée en ce que:

le mât-moyeu intégré (1, 51) est un mât-moyeu selon l'une des revendications 1 à 16 précédentes,

les organes de retenue et d'articulation (16, 66) sont logés à l'intérieur du corps de moyeu (3, 53) et sont fixés en appui par leur armature externe (17, 67) contre la face interne de l'anneau de renforcement (5, 55) ou du corps de moyeu (3, 53) au niveau de l'anneau de renforcement (5, 55), et

l'une des deux branches plates inférieure (24, 74) et supérieure (25, 75) de chaque pièce intermédiaire (23, 73) traverse l'une des ouvertures (6, 56) du corps de moyeu (3, 53), l'autre branche (25) traversant, le cas échéant, une ouverture correspondante (15) formée dans un chapeau (8) recouvrant l'extrémité du corps de moyeu (3, 53) du côté opposé au mât (2, 52).

18. Tête de rotor selon la revendication 17, caractérisée en ce que, pour chaque pale, les organes de retenue et d'articulation comportent une butée lamifiée sphérique (16, 66) fixée à l'intérieur du corps de moyeu (3, 53) de sorte que son centre de rotation soit sensiblement situé dans l'anneau de renforcement (5, 55).

19. Tête de rotor selon l'une des revendications 17 et 18, caractérisé en ce que l'armature externe (17, 67) des organes de retenue et d'articulation (16, 66) de chaque pale (22, 72) est conformée, vers l'extérieur, en étrier qui coiffe l'anneau de renforcement (5, 55) et maintient les organes de retenue et d'articulation correspondants (16, 66) en place à l'intérieur du corps de moyeu (3, 53) en étant boulonnée sur l'anneau de renforcement (5, 55).

20. Tête de rotor selon l'une des revendications 17 à 19, équipée d'un mât-moyeu intégré selon la revendication 11 précédente, caractérisée en ce qu'un talon rigide (79) destiné à venir s'appuyer contre l'anneau réciproque (84) de la butée de battement centrale (80), afin de limiter les battements d'une pale vers le bas, est solidarisé à l'une (74) des branches de la partie d'attache fourchue (73) de la pale (72) correspondante par au moins un organe de fixation (76) assurant simultanément la fixation des extrémités internes des deux branches (74, 75) de cette partie d'attache fourchue (73) à l'armature interne (69) des organes de retenue et d'articulation correspondants (66).

21. Tête de rotor selon l'une des revendications 17 à 19, équipée d'un mât-moyeu intégré selon la revendication 10 précédente, caractérisée en ce que l'armature interne (19) des organes de retenue et d'articulation (16) de chaque pale (22) présente, sur sa face radiale interne, un évidement dont le fond constitue une portée de glissement (28) en forme de calotte sphérique convexe délimitée entre deux becquets (29), la portée de glissement convexe (28) et les deux becquets (29) coopérant respectivement avec la portée de glissement concave (33) et les deux surfaces d'appui (34) de la butée de battement centrale (30), afin de limiter les battements de la pale (22) correspondante des deux côtés du plan de rotation (M) des pales.

22. Tête de rotor selon l'une des revendications 17 à 21, équipée d'un mât-moyeu intégré selon l'une des revendications 14 à 16, précédentes, caractérisée en ce que, pour chaque pale du rotor, un organe (35) de rappel élastique en traînée et d'amortissement (35) est monté à l'extérieur du corps de moyeu (3), entre l'une des attaches d'accouplement (42) portées par l'anneau de renforcement (5) et une autre attache d'accouplement (37) portée par la pièce intermèdiaire (23) ou le pied de la pale (22) correspondante.

23. Tête de rotor selon l'une des revendications 17 à 22, caractérisée en ce qu'elle comprend également, pour chaque pale du rotor, un levier de commande de l'incidence (45, 95) de la pale (22, 72) qui est solidaire en mouvements de la pièce intermédiaire (23, 73) correspondante.

24. Tête de rotor selon l'une des revendications 17 à 23, caractérisée en ce que la pièce intermédiaire, (23, 73) de chaque pale est intégrée au pied de pale (22, 72).

25. Tête de rotor selon l'une des revendications 17 à 23, caractérisée en ce que la pièce intermédiaire de chaque pale (72) est un manchon d'attache (73) sensiblement radial, conformé à son extrémité interne en chape dont les deux branches (74, 75) sont fixées à l'armature interne (69) des organes de retenue et d'articulation correspondants (66), et conformé à son extrémité externe en chape de fixation au pied de la pale correspondante (72) par deux axes (98) sensiblement parallèles à l'axe de rotation (A) du rotor et dont l'un est amovible afin de permettre le repliage de la pale (72) par pivotement autour de l'autre axe.

**Patentansprüche**

1. Mast-Nabeneinheit für einen Rotor eines Drehflügelflugzeuges mit einem röhrenförmigen, einen Mast (2, 52) bildenden Teil, dessen eines Ende zu einem Fuß (4, 54) ausgebildet ist, mit dem die Mast-Nabeneinheit (1, 51) an ein Übertragungselement anbaubar und zu einer Rotation um die Achse (A) des mastbildenden Teils antreibbar ist, welcher an der dem Fuß (4, 54) gegenüberliegenden Seite einstückig mit einem einen Nabenkörper (3, 53) bildenden Teil versehen ist, der zu dem mastbildenden Teil koaxial ist und sich von seinem mit dem Mast (2, 52) verbundenen Endbereich zu seinem gegenüberliegenden Endbereich hin aufweitet, an welchem er durch eine lokale, umlaufende Erweiterung seiner Dicke einstückig mit einem Verstärkungsring (5, 55) versehen ist, der im wesentlichen dazu vorgesehen ist, die von Rotorblättern (22, 72) verursachten Zentrifugalkräfte über zwischengeschaltete Halte- und Gelenkorgane (16, 66) dieser Rotorblätter in der Mast-Nabeneinheit (1, 51) aufzunehmen und auf diese zu übertragen, welche im Inneren des Nabenkörpers (3, 53) angeordnet und an welchen jedes Rotorblatt mit zwei flachen Armen, einem unteren (24, 74) und einem oberen (25, 75), eines Zwischenstücks (23, 73) zur Verbindung mit dem Rotorblatt fest angebracht ist, wobei der Nabenkörper von einer der Zahl der Rotorblätter entsprechenden Anzahl von Öffnungen (6, 56) durchbrochen ist, die in Umfangsrichtung gleichmäßig am gazen Umfang des Nabenkörpers (3, 53) verteilt sind, dadurch gekennzeichnet, daß die identischen Öffnungen (6, 56) am ganzen Umfang des nabenkörpers (3, 53) zwischen dem Mast (2, 52) un dem Verstärkungsring (5, 55) angeordnet sind, um jeweils die Durchführung der unteren Arme (24, 74) des Zwischenstücks (23, 73) zur Befestigung der Rotorblätter (22, 72) an ihren zugeordneten Halte- und Gelenkorganen (16, 66) in das Innere des Verstärkungsringes (5, 55) zu ermöglichen, wobei die Öffnungen (6, 56) eine halbmondförmige oder stark abgerundete, bohnenförmige Gestalt besitzen, die eine generelle, dem Verstärkungsring zugewandte Konkavität besitzt, um Winkelausschläge der unteren Arme (24, 74) durch Anstellen, Schlagbewegung und Antrieb zu erlauben.

2. Mast-Nabeneinheit nach Anspruch 1, dadurch gekennzeichnet, daß der Verstärkungsring (55) eine radial nach außen offene, umlaufende Aufnahme aufweist und daß in diese ein Gürtel (55c) aus einem Verbundwerkstoff eingesetzt ist, der aus Kunstfasern oder aus eine Vorzugsrichtung aufweisenden Mineralen mit hoher mechanischer Festigkeit besteht, die gewikkelt und durch ein synthetisches und gehärtetes Harz gebunden sind.

3. Mast-Nabeneinheit nach Anspruch 1 oder 2, dadurch gekennzeichnet, daß der Verstärkungsring (5) ein radial nach außen von dem Nabenkörper (3) abkragender Kreisring ist.

4. Mast-Nabeneinheit nach Anspruch 3, dadurch gekennzeichnet, daß der Nabenkörper (3) und der Mast (2) aus einem einzigen, rotationssymmetrischen Rohrstück bestehen.

5. Mast-Nabeneinheit nach Anspruch 1 oder 2, dadurch gekennzeichnet, daß der Verstärkungsring (55) eine ausgeprägte polygonale Form hat und einerseits im wesentlichen auf Höhe der Teile (55a) des Verstärkungsrings (55), die in Bezug auf die Öffnungen (56) des Nabenkörpers (53) axial angeordnet sind, radial nach außen, und andererseits auf Höhe der zwischen zwei benachbarten Öffnungen (56) des Nabenkörpers (53) axial angeordneten Teile (55b) des Verstärkungsrings (55) nach innen vom Nabenkörper (53) absteht.

6. Mast-Nabeneinheit nach einem der Ansprüche 1 bis 5, dadurch gekennzeichnet, daß der Mast (2), der Nabenkörper (3) und der Verstärkungsring (5) metallisch sind und daß der Verstärkungsring (5) einen Querschnitt mit einer im wesentlichen rechteckigen Viereckform besitzt.

7. Mast-Nabeneinheit nach einem der Ansprüche 1 bis 6, dadurch gekennzeichnet, daß das Ende der dem Mast (2, 52) gegenüberliegenden Seite des Nabenkörpers (3, 53) von einer Kappe (8) abgedeckt ist, die fest am Nabenkörper (3, 53) angebracht und dazu bestimmt ist, eine kreisförmige Haube als stromlinienförmige Verkleidung der Nabe zu tragen, wobei die Kappe radiale, in Bezug auf eine Quer-Mittelebene (M) des Verstärkungsrings zu dem Nabenkörper (3, 53) angeordneten Öffnungen (6, 56) symmetrische Öffnungen (15) an ihrem Umfang aufweist und wobei die radialen Öffnungen (15) der Kappe dazu dienen, jeweils vom oberen Arm (25, 75) des Zwischenstücks (23, 73) der Rotorblattbefestigung durchsetzt zu werden und diesem freie Winkelausschläge durch Anstellen, Schlagbewegung und Antrieb zu gestatten.

8. Mast-Nabeneinheit nach Anspruch 7, dadurch gekennzeichnet, daß die radialen Öffnungen (15) der Kappe (8) zueinander identisch sind und zu den Öffnungen (6, 56) des Nabenkörpers (3, 53) in Bezug auf den Verstärkungsring (5, 55) im wesentlichen symmetrische Lagen einnehmen.

9. Mast-Nabeneinheit nach einem der Ansprüche 1 bis 8, dadurch gekennzeichnet, daß sie wenigstens einen zentralen Schlagbewegungsanschlag (30, 80) im Inneren der Mast-Nabeneinheit (1, 51) aufweist, welcher dazu dient, die Schlagbewegungen der Rotorblätter auf einer Seite wenigstens in der Rotationsebene (M) der Rotorblätter zu begrenzen, und der durch einen zu der Mast-Nabeneinheit (1, 51) koaxialen und in dieser angeordneten Träger (31, 81) gehalten ist.

10. Mast-Nabeneinheit nach Anspruch 9 zur Ausstattung eines Heckrotors für einen Hubschrauber, dadurch gekennzeichnet, daß der zentrale Schlagbewegungsanschlag (30) ein axiales, im Querschnitt kreisförmiges Stück ist, dessen Außenseite eine konkave Gleichfläche (33) aufweist, die von zwei Auflageflächen (34) begrenzt ist, gegen die jeweils einer von zwei fest mit der Fußbewegung des korrespondierenden Rotorblattes gekoppelten Vorsprüngen (29) bei extremen Winkelausschlägen bei der Schlagbewegung jedes Rotorblattes (2) in Richtung der einen oder anderen Seite der Rotationsebene (M) der Rotorblätter zum Anschlag kommt, wobei die Vorsprünge (29) zwischen sich eine Gleitfläche (28) in Form einer konvexen Kugelkalotte begrenzen, die mit der konkaven Gleitfläche (33) des Schlagbewegungsanschlags (30) zusammenwirkt.

11. Mast-Nabeneinheit nach Anspruch 9 und zur Ausrüstung eines Hauptrotors eines Hubschraubers, dadurch gekennzeichnet, daß der zentrale Schlagbewegungsanschlag (80) einen starren Gegenring (84) beinhaltet, der einen unteren Begrenzungsschlag bildet der nach unten gerichtete Schlagbewegungen der Rotorblätter begrenzt, wobei der Ring seitlich verschiebbar in einer kreisförmigen, sich in Form eines U (82 bis 83) radial nach außen öffnenden Aufnahme eingefügt und axial zwischen dem Mast (52) und den Öffnungen (56) des Nabenkörpers (53) auf einem Trägers (81) befestigt ist.

12. Mast-Nabeneinheit nach einem der Ansprüche 10 und 11, dadurch gekennzeichnet, daß der Träger (31) des zentralen Schlagbewegungsanschlags (30) glockenförmig aufgeweitet ist und an seinem verengten Ende den Schlagbewegungsanschlag (30) trägt, während er endseitig an der Kappe (8) befestigt ist.

13. Mast-Nabeneinheit nach einem der Ansprüche 10 und 11, dadurch gekennzeichnet, daß der Träger (81) des zentralen Schlagbewegungsanschlags (80) eine rohrförmige und im wesentlichen konische Anschlagfläche (81c) gegenüber der Innenfläche des Nabenkörpers (53) und einen rohrförmigen Zentrierflansch (81b) aufweist, der ebenfalls im wesentlichen konisch ist und der einstückig mit der Anlagefläche (81c) ausgebildet ist und den Schlagbewegungsanschlag (80) trägt.

14. Mast-Nabeneinheit nach einem der Ansprüche 1 bis 13, dadurch gekennzeichnet, daß der Verstärkungsring (5) mit Laschen (42) versehen ist, deren Anzahl der Anzahl der Rotorblätter entspricht und von denen jede zur Kupplung der Mastnabe (1) mit dem inneren Ende eines elastischen Steuerorganes zum Antrieb und zur Dämpfung (35) eines Rotorblattes dient, wobei jede Lasche (42) radial vom Nabenkörper (3) nach außen absteht und durch einen Teil des Verstärkungsringes (5) gehalten ist, der zwischen zwei Öffnungen (6) des Nabenkörpers (3) angeordnet ist.

15. Mast-Nabeneinheit nach Anspruch 14, dadurch gekennzeichnet, daß jede Lasche durch eine Gabel gebildet ist, deren beide Schenkel (92') aus einem Stück mit dem Verstärkungsring (55') bestehen.

16. Mast-Nabeneinheit nach Anspruch 14, dadurch gekennzeichnet, daß jede Lasche aus einem Stück (42) besteht, das auf dem Verstärkungsring (5) zwischen zwei in dem Ring (5) ausgebildeten, zur Gewichtsverringerung vorgesehenen Öffnungen (44) eingesetzt ist.

17. Rotorkopf für einen Hubschrauberrotor, der mit einer Mast-Nabeneinheit (1, 51) ausgerüsteten Art, die um eine Achse (A) des Rotors durch einen ihrer, einen Mast (2, 52) bildenden Teile in Drehung versetzbar ist und die einen einen Nabenkörper bildenden Teil (3, 53) aufweist, dem die Rotorblätter (22, 72) jeweils einerseits über Halte- und Gelenkorgane (16, 66) angebracht sind, die eine radial außenliegende Armatur (17, 67) besitzen, die an dem den Nabenkörper (3, 53) bildenden Teil befestigt ist und eine radial innere Armature (19, 69), die an den inneren Enden von zwei flachen innerem Armen (24, 74) und oberhalb (25, 75) eines Zwischenverbindungsstückes (23, 73) mit dem Rotorblatt liegen und zum anderen durch ein elastisches Zug- und Dämpfungsorgan (35, 85) des Rotorblattes verbunden sind, deren Enden über ein Kugelgelenk angelenkt sind, von denen eines (36, 66) an dem Zwischenstück (23, 73) oder dem korrespondierenden Rotorblattfuß (22, 72) und das andere (41, 91) an einem Punkt des Nabenkörpers (3, 53) angelenkt ist, gekennzeichnet dadurch:

die Mastnabeneinheit (1, 51) eine nach einem der vorhergehenden Ansprüche 1 bis 16 ist,

daß die Halte- und Gelenkorgane (16, 66) innerhalb des Nabenkörpers (3, 53) angeordnet und mit ihrer äußeren Armatur (17, 67) auf Anschlag an der inneren Fläche des Verstärkungsringes (5, 55) oder des Nabenkörpers (3, 53) in Höhe des Verstärkungsringes (5, 55) gehalten sind und

daß einer der beiden unteren (24, 74) und oberen (25, 75) flachen Arme jedes Zwischenstückes (23, 73) eine der Öffnungen (6, 56) des Nabenkörpers (3, 53) durchsetzt und der andere Arm (25) gegebenenfalls eine korrespondierende Öffnung (15) in einer Kappe (8) durchsetzt, die das Ende des Nabenkörpers (3, 53) auf der von dem Mast (2, 52) abgewandten Seite abdeckt.

18. Rotorkopf nach Anspruch 17, dadurch gekennzeichnet, daß für jedes Rotorblatt die Halte- und Gelenkorgane mit einem sphärischen Lager (16, 66) versehen sind, das im Inneren des Nabenkörpers (3, 53) so befestigt ist, daß sein Rotationszentrum im wesentlichen innerhalb des Verstärkungsringes (5, 55) liegt.

19. Rotorkopf nach einem der Ansprüche 17 und 18, dadurch gekennzeichnet, daß die äußere Armatur (17, 67) der Halte- und Gelenkorgane (16, 66) jedes Rotorblattes (22, 72) nach außen von einem Bügel gebildet werden, der den Verstärkungsring (5, 55) übergreift und die korrespondierenden Halte- und Gelenkorgane (16, 66) in ihrer Lage innerhalb des Nabenkörpers (3, 53) hält, wo sie am Verstärkungsring (5, 55) verbolzt sind.

20. Rotorkopf nach einem der Ansprüche 17 bis 19, der mit einer Mast-Nabeneinheit nach Anspruch 11 ausgerüstet ist, dadurch gekennzeichnet, daß ein fester Ansatz (79), der dazu dient, sich an einem Gegenring (84) des zentralen Schlagbewegungsanschlages (80) anzulegen, um die Ausschläge eines Rotorblattes nach unten zu begrenzen, fest an einem (74) der Arme des gabelförmigen Laschenteiles (73) des zugeordneten Rotorblattes (72) mit Hilfe eines Befestigungsorganes (76) angebracht ist, der gleichzeitig die Befestigung der inneren Enden der beiden Arme (74, 75) dieses gabelförmigen Laschenteiles (73) an der inneren Armatur (69) des zugeordneten Halte- und Gelenkorganes (66) erlaubt.

21. Rotorkopf nach einem der Ansprüche 17 bis 19, der mit einer Mast-Nabeneinheit nach Anspruch 10 ausgerüstet ist, dadurch gekennzeichnet, daß die innere Armatur (19) der Halte- und Gelenkorgane (16) jedes Rotorblattes (22) auf ihrer radial inneren Fläche eine Ausnehmung aufweisen, deren Boden eine Gleitfläche (28) in der Form einer konvexen Kugelkalotte bildet, die zwischen zwei Vorsprüngen (29) liegt, wobei die konvexe Gleitfläche (28) und die beiden Vorsprünge (29) jeweils mit einer konkaven Gleitfläche (33) und den beiden Anschlagflächen (34) des zentralen Schlagbewegungsanschlages (30) zusammenwirken, um die Schlagbewegungen des korrespondierenden Rotorblattes (22) nach beiden Seiten der Rotationsebene (M) der Rotorblätter zu begrenzen.

22. Rotorkopf nach einem der Ansprüche 17 bis 21, der mit einer Mast-Nabeneineinheit nach einem der Ansprüche 14 bis 16 ausgestattet ist, dadurch gekennzeichnet, daß für jedes Rotorblatt ein elastisches Steuerorgan (35) zum Antrieb und zur Dämpfung an der Außenseite des Nabenkörpers (3) angebracht ist, und zwar zwischen einer der Kupplungslaschen (42), die vom Verstärkungsring (5) getragen werden und einer anderen Befestigungslasche (37), die von dem Zwischenstück (23) oder dem Fuß des zugeordneten Rotorblattes (22) getragen wird.

23. Rotorkopf nach einem der Ansprüche 17 bis 22, dadurch gekennzeichnet, daß er für jedes Rotorblatt auch einen Trimmsteuerhebel (45, 95) für das Rotorblatt (22, 72) aufweist, der fest mit den Bewegungen des korrespondierenden Zwischenstückes (23, 73) verbunden ist.

24. Rotorkopf nach einem der Ansprüche 17 bis 23, dadurch gekennzeichnet, daß das Zwischenstück (23, 73) jedes Rotorblattes (22, 72) am Fuß des Rotorblattes (22, 72) integriert ist.

25. Rotorkopf nach einem der Ansprüche 17 bis 23, dadurch gekennzeichnet, daß das Zwischenstück jedes Rotorblattes (72) eine im wesentlichen radiale Befestigungsmuffe (73) ist, die am ihrem inneren Ende als ein Gabelgelenk ausgebildet ist, dessen beiden Schenkel (74, 75) an der inneren Armatur (69) des zugeordneten Halte- und Gelenkorganes (66) befestigt sind und die an ihrem äußeren Ende als eine Befestigungsgabel für den Fuß des korrespondierenden Rotorblattes (72) mit zwei im wesentlichen parallel zur Rotationsachse (A) des Rotors verlaufenden Achsen befestigbar ist, von denen eine lösbar ist, um das Klappen des Rotorblattes (72) durch Schwenkung um die andere Achse zu ermöglichen.

**Claims**

1. Mast-hub unit for the rotor of a rotary-wing aircraft, of the type having a tubular part forming a mast (2, 52), one end of which is shaped into a foot (4, 54) by means of which the mast-hub (1, 51) is intended to be fixed onto a transmission member and driven in rotation about the axis (A) of the part forming the mast, which part is rigidly connected, on the opposite end to the foot (4, 54) to a part forming a hub body (3, 53) coaxial with the part forming the mast and which widens out from its end portion by means of which it is connected to the mast (2, 52) to its opposite end portion to which there is rigidly connected a reinforcing ring (5, 55) formed by a local, peripheral increase in its thickness, the ring being intended essentially to absorb and transmit into the mast-hub (1, 51) the centrifugal forces issuing from the blades (22, 72) by way of devices (16, 66) for retaining and articulating the said blades, which devices are housed inside the hub body (3, 53) and to which each of the said blades is rigidly connected by the two flat limbs, lower limb (24, 74) and upper limb (25, 75), of an intermediate member (23, 73) for connection with the blade, the said hub body being pierced by openings (6, 56) equal in number to the number of blades and evenly distributed in a circumferential direction over the periphery of the said body (3, 53), characterised in that the openings (6, 56), identical to one another, are arranged on the periphery of the hub body (3, 53) between the mast (2, 52) and the reinforcing ring (5, 55) to permit the passage of each of the lower limbs (24, 74) of the intermediate member (23, 73) for connection of the blades (22, 72), with their corresponding retaining and articulating devices (16, 66) inside the reinforcing ring (5, 55), the said openings (6, 56) having substantially a half-moon shape or a very rounded kidney-shape, having a general concavity turned towards the reinforcing ring in such a way as to permit the angular clearances in pitch, flapping and lag of the said lower limbs (24, 74).

2. Mast-hub unit according to Claim 1, characterised in that the reinforcing ring (55) has a peripheral seating opening radially towards the outside and in which there is housed a belt (55c) of composite material, having unidirectional synthetic or mineral fibres of high mechanical strength, wound and bonded by a synthetic, hardened resin.

3. Mast-hub unit according to one of Claims 1 and 2, characterised in that the reinforcing ring (5) is a circular ring projecting radially towards the outside of the hub body (3).

4. Mast-hub unit according to Claim 3, characterised in that the hub body (3) and the mast (2) consist of a single, rotationally symmetrical, tubular part.

5. Mast-hub unit according to one of Claims 1 and 2, characterised in that the reinforcing ring (55) is of a substantially polygonal shape and projects radially on the one hand towards the outside of the hub body (53) substantially at the portions (55a) of the reinforcing ring (55) situated axially opposite the openings (56) in the hub body (53) and, on the other hand, towards the inside of the hub body (53) substantially at the portions (55b) of the reinforcing ring (55) situated axially between two adjacent openings (56) of the hub body (53).

6. Mast-hub unit according to one of Claims 1 to 5, characterised in that the mast (2), the hub body (3) and the reinforcing ring (5) are metallic, and the reinforcing ring (5) has a cross-section substantially in the shape of a rectangular quadrilateral.

7. Mast-hub unit according to one of Claims 1 to 6, characterised in that the end of the hub body (3, 53) on the opposite side to the mast (2, 52) is covered by a cap (8) rigidly connected to the hub body (3, 53) and intended to support a circular aerodynamic fairing dome of the hub, the said cap having on its periphery radial openings (15) which are symmetrical, in relation to the middle transverse plane (M) of the reinforcing ring (5, 55), to the openings (6, 56) provided in the hub body (3, 53), the said radial openings (15) of the cap being intended to be traversed by each of the upper limbs (25, 75) of the intermediate member (23, 73) for connection with the blade and to permit it free angular clearances in pitch, flapping and lag.

8. Mast-hub unit according to Claim 7, characterised in that the radial openings (15) of the cap (8) are identical to one another and occupy positions substantially symmetrical to those of the openings (6, 56) of the hub body (3, 53) in relation to the reinforcing ring (5, 55).

9. Mast-hub unit according to one of Claims 1 to 8, characterised in that it comprises at least one central flapping abutment (30, 80) within the mast-hub (1, 51), intended to limit the flapping of the blades of the rotor on at least one side of the plane of rotation of the blades (M) and held by a support (31, 81) coaxial with the mast-hub (1, 51) and housed in the latter.

10. Mast-hub unit according to Claim 9 and intended for a helicopter tail rotor, characterised in that the central flapping abutment (30) is an axial member of circular cross-section, the outer lateral face of which has a concave sliding surface (33) defined between two bearing surfaces (34) against each of which there is intended to abut, during extreme angular flapping deflections of each blade (2) on one side or the other of the plane of rotation of the blades (M), one of the two projections (29) rigidly connected in respect of movement to the root of the corresponding blade and between which there is defined a sliding surface (28) in the form of a convex spherical dome, intended to co-operate with the concave sliding surface (33) of the flapping abutment (30).

11. Mast-hub unit according to Claim 9 and intended for the main rotor of a helicopter, characterised in that the central flapping abutment (80) comprises a rigid reciprocal ring (84) intended to form a lower abutment limiting the downward flapping of the rotor blades, and mounted laterally, sliding in a circular U-shaped seating (82—83) opening radially towards the outside, and fixed to the support (81) at an axial level situated between the mast (52) and the openings (56) in the hub body (53).

12. Mast-hub unit according to one of Claims 10 and 11, characterised in that the support (31) of the central flapping abutment (30) widens out and carries the flapping abutment (30) at its constricted end, while it is fixed to the cap (8) by its end.

13. Mast-hub unit according to one of Claims 10 and 11, characterised in that the support (81) of the central flapping abutment (80) comprises a substantially frustoconical tubular bearing surface (81c) for bearing against the inner face of the hub body (53) and a tubular centreing web (81b), also substantially frustoconical, which is rigidly connected to the bearing surface (81c) and supports the flapping abutment (80).

14. Mast-hub unit according to one of Claims 1 to 13, characterised in that the reinforcing ring (5) carries attaching means (42) equal in number to the number of blades, and each intended for coupling to the mast-hub (1) the inner end of a device (35) for resilient return in lag and for damping of a blade, each attaching means (42) projecting radially towards the outside of the hub body (3) and being carried by a portion of the reinforcing ring (5) situated between two openings (6) of the hub body (3).

15. Mast-hub unit according to Claim 14, characterised in that each attaching means is formed by a fork, the two limbs (92') of which are integral with the reinforcing ring (55').

16. Mast-hub unit according to Claim 14, characterised in that each attaching means is a member (42) attached to the reinforcing ring (5) between two weight-reducing cut-outs (44) provided in the said ring (5).

17. Rotor head for the rotor of a rotating-wing aircraft, of the type having a mast-hub unit (1, 51), intended to be driven in rotation about the axis (A) of the rotor by one of its parts forming a mast (2, 52) and having a part forming a hub body (3, 53) and to which part the rotor blades (22, 72) are each connected, on the one hand by way of retaining and articulating devices (16, 66) having an outer radial member (17, 67) fixed to the part forming the hub body (3, 53) and an inner radial member (19, 69) fixed to the inner ends of the two flat limbs, the lower limb (24, 74) and the upper limb (25, 75), of an intermediate member (23, 73) for connection with the blade, and on the other hand by way of a device (35, 85) for resilient return in lag and for damping of the blade, the ends of which device are hinged by means of ball-joints, one (36, 86) on the intermediate member (23, 73) or the corresponding blade root (22, 72), and the other (41, 91) at a point on the hub body (3, 53), characterised in that:

the mast-hub unit (1, 51) is a mast-hub according to one of the preceding Claims 1 to 16,

the retaining and articulating devices (16, 66) are housed inside the hub body (3, 53) and are fixed by their outer member (17, 67) so as to bear against the inner face of the reinforcing ring (5, 55) or of the hub body (3, 53) on a level with the reinforcing ring (5, 55), and

one of the two flat limbs, the lower limb (24, 74) or upper limb (25, 75), of each intermediate member (23, 73) passes through one of the openings (6, 56) in the hub body (3, 53), the other limb (25) passing, as appropriate, through a corresponding opening (15) formed in a cap (8) covering the end of the hub body (3, 53) on the opposite end to the mast (2, 52).

18. Rotor head according to Claim 17, characterised in that, for each blade, the retaining and articulating devices have a spherical laminated abutment (16, 66) fixed inside the hub body (3, 53) so that its centre of rotation is substantially situated in the reinforcing ring (5, 55).

19. Rotor head according to one of Claims 17 and 18, characterised in that the outer member (17, 67) of the retaining and articulating devices (16, 66) of each blade (22, 72) is shaped, towards the outside, to form a stirrup which covers the reinforcing ring (5, 55) and holds the corresponding retaining and articulating devices (16, 66) in place within the hub body (3, 53) by being bolted to the reinforcing ring (5, 55).

20. Rotor head according to one of Claims 17 to 19, equipped with a mast-hub unit according to the preceding Claim 11, characterised in that a rigid projection (79) intended to bear against the reciprocal ring (84) of the central flapping abutment (80), in order to limit the downward flapping of a blade, is rigidly connected to one (74) of the limbs of the forked attachment part (73) of the corresponding blade (72) by at least one fixing member (76) simultaneously effecting the fixing of the inner ends of the two limbs (74, 75) of the said forked attachment part (73) to the inner member (69) of the corresponding retaining and articulating devices (66).

21. Rotor head according to one of Claims 17 to 19, equipped with a mast-hub unit according to the preceding Claim 10, characterised in that the inner member (19) of the retaining and articulating devices (16) of each blade (22) has, on its radial face, a recess, the bottom of which forms a sliding surface (28) in the form of a convex spherical dome defined between two projections (29), the convex sliding surface (28) and the two projections (29) respectively co-operating with the concave sliding surface (33) and the two bearing surfaces (34) of the central flapping abutment (30) in order to limit the flapping of the corresponding blade (22) on both sides of the plane of rotation (M) of the blades.

22. Rotor head according to one of Claims 17 to 21, equipped with a mast-hub unit according to one of the preceding Claims 14 to 16, characterised in that for each blade of the rotor a device (35) for resilient return in lag and for damping is mounted on the outside of the hub body (3), between one of the coupling attaching means (42) carried by the reinforcing ring (5) and another coupling attaching means (37) carried by the intermediate member (23) or the root of the corresponding blade (22).

23. Rotor head according to one of Claims 17 to 22, characterised in that it also comprises, for each blade of the rotor, a lever (45, 95) for controlling the incidence of the blade (22, 72) which is rigidly connected in respect of movement to the corresponding intermediate member (23, 73).

24. Rotor head according to one of Claims 17 to 23, characterised in that the intermediate member (23, 73) of each blade is integral with the blade root (22, 72).

25. Rotor head according to one of Claims 17 to 23, characterised in that the intermediate member of each blade (72) is a substantially radial attachment sleeve (73) shaped at its inner end into a fork, the two limbs (74, 75) of which are fixed to the inner member (69) of the corresponding retaining and articulating devices (66), and shaped at its outer end into a fork for fixing to the root of the corresponding blade (72) by two pins (98) substantially parallel to the axis of rotation (A) of the rotor and one of which is removable in order to allow the blade (72) to be folded back by pivoting about the other pin.

FIG.2

FIG.1

EP 0 213 016 B1

FIG.3

EP 0 213 016 B1

## FIG.4

FIG.5

FIG.7

FIG.6